# EUROPÄISCHE PATENTSCHRIFT

(11) **EP 0 529 669 B1**
(45) Veröffentlichungstag und Bekanntmachung des Hinweises auf die Patenterteilung: **26.10.1994**
(21) Anmeldenummer: 92114790.6
(22) Anmeldetag: 28.08.1992
(51) Int. Cl.: F16F 15/12

(54) **Zweimassenschwungrad**
Two mass flywheel drive system
Volant d'inertie à deux masses

(30) Priorität: 30.08.1991 DE 4128868
(43) Veröffentlichungstag der Anmeldung: 03.03.1993
(73) Patentinhaber: Fichtel & Sachs AG, D-97419 Schweinfurt (DE)
(72) Erfinder: Feldhaus, Reinhard, W-8735 Ebenhausen (DE); Schierling, Bernhard, W-8702 Kürnach (DE); Förster, Andreas, W-8720 Schweinfurt (DE); Goebel, Hilmar, W-8722 Grafenrheinfeld (DE)
(74) Vertreter: Liska, Horst, Dr.-Ing.

(56) Entgegenhaltungen:
- DE-A- 4 134 406
- DE-C- 3 916 575
- DE-U- 9 017 936
- FR-A- 2 624 236
- FR-A- 2 640 709
- GB-A- 2 066 416
- GB-A- 2 241 560

## Beschreibung

Die Erfindung betrifft ein Zweimassenschwungrad zur Anordnung im Antriebsstrang eines von einer Brennkraftmaschine angetriebenen Kraftfahrzeugs, gemäß Obergriff des Anspruchs 1.

Ein derartiges Zweimassenschwungrad ist sowohl aus der DE-U-9 017 936 als auch aus der FR-A-2 640 709 bekannt.

Aus der DE-A-37 21 712 ist ein Zweimassenschwungrad mit zwei relativ zueinander drehbar gelagerten Schwungrädern bekannt, die durch eine Drehschwingungsdämpfereinrichtung drehelastisch miteinander gekuppelt sind. Während ein erstes der beiden Schwungräder an der Kurbelwelle der Brennkraftmaschine befestigt ist, trägt das zweite Schwungrad eine Reibungskupplung, über die das im Antriebsstrang nachfolgende Getriebe beim Anfahren und Schalten von der Brennkraftmaschine getrennt werden kann.

Bei dem bekannten Zweimassenschwungrad enthält das erste Schwungrad einen die Drehachse kreisförmig umschließenden Kanal, in welchem mehrere, vergleichsweise lange Schraubenfedern angeordnet sind, die jeweils für sich über Endschuhe der Drehschwingungsdämpfereinrichtung gesteuert werden. Die Schraubenfedern sind einander parallel geschaltet, ermöglichen aber aufgrund ihrer großen Länge einen vergleichsweise großen Relativdrehwinkel zwischen den beiden Schwungrädern. Zur Minderung der Reibung ist der Kanal zumindest teilweise mit einem viskosen Schmiermittel gefüllt.

Aufgrund ihrer großen Länge werden die Schraubenfedern des bekannten Zweimassenschwungrads während des Betriebs infolge der Kompression und der Fliehkraft an die den Kanal nach radial außen begrenzende Innenwandfläche des ersten Schwungrads gedrückt. Durch die Reibung der Schraubenfedern an der Innenwandfläche entsteht bereits bei niedrigen Drehzahlen und kleinen Verdrehwinkeln der Schwungräder gegeneinander eine kontrollierbare, hohe Grundreibung.

Es ist Aufgabe der Erfindung, ein Zweimassenschwungrad anzugeben, dessen Grundreibung auf einem definierten niedrigen Wert gehalten werden kann, und zwar auch über eine vergleichsweise lange Lebensdauer hinweg mit möglichst gleichbleibender Dämpfungswirkung.

Gelöst wird diese Aufgabe mit den Merkmalen des Anspruchs 1.

Die zwischen den einzelnen, vorzugsweise zylindrischen Schraubenfedern angeordneten Gleitschuhe ermöglichen eine Drehfederung mit geringer Federsteifigkeit. Da die einzelnen Schraubenfedern durch Gleitschuhe voneinander getrennt sind, besteht keine Gefahr, daß die Schraubenfedern die den Kanal nach außen begrenzende Innenwandfläche des ersten Schwungrads in direktem Kontakt berühren. Während bei dem bekannten Zweimassenschwungrad in der Praxis vorgekrümmte Schraubenfedern verwendet werden müssen, vereinfacht sich die Herstellung und die Handhabung der Schraubenfedern bei dem erfindungsgemäßen Zweimassenschwungrad, bei welchem normale Schraubenfedern mit geradliniger Federachse verwendet werden können. Durch die Hintereinanderschaltung der Schraubenfedern wird eine niedrige Federrate erzielt. Durch die Kombination von Schraubenfedern unterschiedlicher Steifigkeit wird, wie dies in bevorzugten Ausführungsformen vorgesehen ist, die Abstimmung der Dämpfungseigenschaften erleichtert.

Die Gleitschuhe liegen bevorzugt mit einem gewölbten, radial äußeren Bereich an der den Kanal nach radial außen begrenzenden Innenwandfläche des ersten Schwungrads an und sind in diesem Bereich bevorzugt verschleißarm und gleitgünstig ausgebildet. Die gleitgünstige Ausbildung führt zu einer niedrigen Grundreibung, so daß die in bestimmten Betriebszuständen gegebenenfalls erforderliche höhere Reibung gezielt durch separate Reibeinrichtungen erzeugt werden kann. Die niedrige Grundreibung verbessert die Abstimmöglichkeiten des gesamten Drehmomentübertragungssystems. Die niedrige Grundreibung stellt darüber hinaus sicher, daß beispielsweise im Leerlaufbetrieb bei sehr niedriger Drehmomentbelastung der Getriebewelle Getriebegeräusche leichter eliminiert werden können.

Die Gleitschuhe können insgesamt aus gleitgünstigem Material bestehen. Sie können aber auch aus unterschiedlichen Materialien hergestellt sein und lediglich in den für die Anlage an der Innenwandfläche des ersten Schwungrads bestimmten Bereichen aus einem gleitgünstigen und verschleißarmen Material bestehen, während für die übrigen Bereiche anderes Material verwendet wird. Beispielsweise können die Gleitschuhe aus Metall bestehen und im Bereich ihrer Anlageflächen gehärtet sein. Es ist jedoch auch möglich, die Gleitschuhe aus Metall herzustellen und im gewölbten Anlagebereich mit einer gleitgünstigen Auflage zu beschichten.

Besonders vorteilhaft sind Ausführungsformen, bei welchen die Gleitschuhe vollständig aus Kunststoff hergestellt sind. Hierdurch läßt sich auf einfache Weise eine gleitgünstige Materialpaarung sowie geringes Gewicht erreichen, wodurch die Gleitschuhe auch bei hohen Drehzahlen nur verhältnismäßig geringe Reibmomente erzeugen. Die Gleitschuhe sind bevorzugt aus einem faserverstärkten Kunststoff hergestellt, wobei als Verstärkungsmaterial beispielsweise Glasfasern oder Kohlefasern verwendet werden können und insbesondere auch im gewölbten Auflagebereich eine gleitgünstige Auflage bzw. Beimischung vorgesehen werden kann. Als Grundmaterial kann beispielsweise thermoplastisches Material, insbesondere Polyamid, vorgesehen sein, das einen Anteil von beispielsweise 30 bis 50 % Glasfasern und eine Beimischung von Teflon zur Verbesserung der Gleiteigenschaften enthalten kann.

Um die Schraubenfedern besser führen zu können, wird vorgeschlagen, daß die Gleitschuhe in ihrem gewölbten Bereich nach beiden Umfangsrichtungen mit Verlängerungen versehen werden, die die Schraubenfedern gegenüber den Gleitschuhen führen und deren Relativbewegung in Umfangsrichtung auf ein Minimum reduzieren. Durch diese Maßnahmen wird die Grundreibung verringert. In diesem Zusammenhang ist es auch zweckmäßig, wenn die Außenkontur des gewölbten Bereichs einschließlich beider Verlängerungen der Gleitschuhe dem Radius der Innenwandfläche des ersten Schwungrads angepaßt ist, d.h. gleichen oder geringfügig kleineren Krümmungsradius hat.

In einer bevorzugten Ausgestaltung der Erfindung sind die Federauflageflächen für die Enden der Schraubenfedern im wesentlichen kreisförmig und eben ausgebildet und verlaufen etwa senkrecht zur Federachse. Im radial inneren Bereich stehen nach beiden Umfangsrichtungen kurze Federführungsfortsätze ab, die die Schraubenfedern auch nach radial innen hin definiert führen.

Die in Umfangsrichtung jeweils äußersten Stirnenden der endständigen Schraubenfedern jedes Satzes werden bevorzugt in Federtöpfen bzw. Endschuhen geführt, die auch der Krafteinleitung in den Schraubenfedersatz dienen. Die Endschuhe haben zweckmäßigerweise wiederum eine im wesentlichen kreisförmige, ebene Federauflagefläche, die etwa senkrecht zur Federachse verläuft, und sind für die Anlage an Steuerelementen der Drehschwingungsdämpfereinrichtung mit prismatischen Führungen versehen, die aus zwei vorzugsweise ebenen und in Richtung der Drehachse sich erstreckenden Prismenflächen bestehen. Die Prismenflächen sind unter einem Winkel zueinander geneigt. Gesehen in einer Axialquerschnittsebene kann eine Gerade durch den Schnittpunkt dieser Flächen einerseits und durch den Schnittpunkt zwischen der Federachse und der Federauflagefläche gelegt werden, die im Ruhezustand mit der Federachse einen spitzen Winkel bildet, bei maximal komprimierter Schraubenfeder jedoch im wesentlichen in Richtung der Federachse verläuft. Insbesondere bei höchsten Belastungen der jeweiligen Schraubenfeder ist auf diese Weise eine sichere Übertragung der Kräfte von der Schraubenfeder über den Endschuh auf das Steuerelement gewährleistet. Zugleich wird durch diese Anordnung die Schraubenfeder bei hoher Belastung nach radial innen vorgespannt, was dem Bestreben der Schraubenfeder, bei höheren Drehzahlen nach radial außen auszuweichen, entgegenwirkt.

Auch jeder Endschuh weist in seinem radial außen liegenden Bereich eine Verlängerung auf, die die endständige Schraubenfeder zumindest auf einem Teil ihrer Längserstreckung nach radial außen abdeckt. Damit ist gewährleistet, daß bei höchsten Drehzahlen die Schraubenfedern - wenn überhaupt - nach radial außen lediglich am Endschuh zur Anlage kommen und ein direkter Kontakt von Metall auf Metall zum ersten Schwungrad vermieden wird. Die Außenkontur des Endschuhs ist entsprechend den Gleitschuhen wiederum dem Radius des Kanals des ersten Schwungrads angepaßt, d.h. mit einem Krümmungsradius versehen, der gleich oder geringfügig kleiner als der Radius der radial äußeren Innenwandfläche des Kanals ist.

Eine besonders geringe Grundreibung kann erzielt werden, wenn die Außenkontur der Endschuhe im Ruhezustand einen Abstand zur Innenwandfläche des ersten Schwungrads hat, der Endschuh also keinen Beitrag zur Grundreibung leistet.

Durch geeignete Gestaltung der prismatischen Führung der Endschuhe, insbesondere durch geeignete Wahl der Neigung der radial äußeren Prismenfläche, durch geeignete Wahl der Reibbeiwerte der aneinanderliegenden Materialien und der Vorspannung der Schraubenfedern läßt sich erreichen, daß der Endschuh infolge Fliehkraft bei einer vorgegebenen Drehzahl nach radial außen wandert und an der den Kanal nach radial außen begrenzenden Innenwandfläche zur Anlage kommt. Auf diese Weise kann ein gezielter Reibungseinsatz der Endschuhe ab einer bestimmten Drehzahl erreicht werden.

Auch jeder Endschuh ist zumindest in seinem an der Innenwandfläche des Kanals des ersten Schwungrads anliegenden, gewölbten Bereich verschleißarm und gleitgünstig ausgebildet. Auch hier kann der Endschuh als Ganzes aus gleitgünstigem Material hergestellt sein. Er kann jedoch auch aus Metall hergestellt sein und zumindest im radial außen liegenden Bereich, insbesondere im Bereich seiner Verlängerung, gehärtet sein. Ein Verschleißschutz dieser Art läßt sich besonders einfach herstellen. Es ist jedoch auch möglich, den Endschuh aus Metall herzustellen und im radial außen liegenden Bereich, insbesondere im Bereich der Verlängerung, mit einer gleitgünstigen Auflage zu beschichten.

Aus der Sicht der Herstellungskosten- und der Gewichtsoptimierung ist es besonders vorteilhaft, den Endschuh aus Kunststoff herzustellen. Durch die Gewichtsoptimierung wird nicht nur das Gewicht der gesamten Einrichtung verringert, sondern auch der Fliehkrafteinfluß verringert, wodurch die Zunahme der Reibkraft mit zunehmender Drehzahl sehr gering ausfällt. Bei hoher Belastung ist es vorteilhaft, den Kunststoff zum Beispiel mit Glasfasern oder Kohlefasern zu verstärken und gegebenenfalls im radial außen liegenden Bereich der Verlängerung mit einer gleitgünstigen Auflage bzw. Beimischung, zum Beispiel aus Teflon, zu versehen. Diese Maßnahmen führen zu den bereits für die Gleitschuhe angegebenen Vorteilen.

Zur besseren Führung der Schraubenfedern wird weiterhin vorgeschlagen, daß die kreisförmigen, ebenen Federauflageflächen der Endschuhe nach radial innen in einen Federführungsfortsatz münden, der in Richtung der Federachse verläuft und nur vergleichsweise kurz ist. Weiterhin wird vorgeschlagen, daß im Bereich der Verlängerung des Endschuhs eine oder mehrere axial nebeneinander angeordnete, nach radial außen hin offene, schmierkeilfördernde Anschrägungen in Form von Schmiernuten vorgesehen sind, die ihre größte Tiefe am freien Ende der Verlängerung haben und in Richtung auf die Flächen der Prismenführung zu noch vor diesen auslaufen. Das den Kanal in einer bevorzugten Ausgestaltung der Erfindung zumindest teilweise ausfüllende viskose Material erzeugt insbesondere bei großer Relativgeschwindigkeit einen Schmierkeil, der sowohl die Reibung als auch den Verschleiß auf ein Minimum reduziert. Entsprechende Maßnahmen können auch vorteilhaft bei den Gleitschuhen vorgesehen werden, wodurch auch hier die Reibung und der Verschleiß gezielt erheblich herabgesetzt werden können.

Das erste Schwungrad ist in einer bevorzugten Ausgestaltung der Erfindung aus mehreren Teilen zusammengesetzt und umfaßt insbesondere eine brennkraftmaschinennahe Primärscheibe, die radial innen an einer Nabe fest angeordnet ist, eine im Abstand davon gehaltene brennkraftmaschinenferne Deckscheibe sowie einen Ring, der nach innen durch eine ringzylindrische Fläche begrenzt ist und die beiden Scheiben im Bereich ihres Außendurchmessers im Abstand voneinander zusammenhält, so daß sich ein zumindest in seinem radial äußeren Bereich im Querschnitt rechteckförmiger, umlaufender Kanal bildet. Der Ring ist an seiner Innenwandfläche bevorzugt fein bearbeitet und ist an seinem Außendurchmesser zweckmäßigerweise einteilig mit einem Anlasserzahnkranz versehen. Die Feinbearbeitung kann spanabhebend erfolgen. Vorteilhaft läßt sich jedoch auch eine nicht spanabhebende Oberflächenverdichtung durch Rollen erreichen. Die Einzelteile des ersten Schwungrads können auf unterschiedliche Weise miteinander verbunden sein. Bei hinreichendem Bauraum können die Teile gegenseitig vernietet sein. Wegen des geringeren Platzbedarfs ist jedoch eine Schweißverbindung bevorzugt, durch die auch zugleich eine flüssigkeitsdichte Verbindung der Bauteile erreicht wird.

Die Endschuhe und die Gleitschuhe sind im Querschnitt zumindest im radial äußeren Bereich des Kanalquerschnitts diesem angepaßt, wobei die Schraubenfedern in axialer Richtung der Schwungräder durch die Deckscheibe und die Primärscheibe geführt werden. Die Endschuhe und die Gleitschuhe werden bevorzugt nicht nur im Bereich ihrer Verlängerungen seitlich geführt, sondern zusätzlich auch über seitliche Führungsflächen, die sich etwa bis in die radiale Höhe der Federachsen der Schraubenfedern erstrecken. Auf diese Weise wird sichergestellt, daß die Endschuhe und Gleitschuhe nicht zum Verdrehen und Verkanten neigen.

Die Verlängerungen der Endschuhe und Gleitschuhe werden in vorteilhafter Weise als Endanschläge ausgenutzt, um die maximale Kompression der Schraubenfedern zu begrenzen. Auf diese Weise kann jedoch nicht nur die maximale Belastung der Schraubenfedern begrenzt werden, sondern es kann auch die Federkennlinie des Federsatzes beeinflußt werden, derart, daß mit zunehmendem Verdrehwinkel die Federsteifigkeit sich verändert und insbesondere zunimmt. Um die Masse der Endschuhe und Gleitschuhe zu begrenzen, können die Verlängerungen in Umfangsrichtung jedoch verkürzt ausgeführt sein, während zwischen jeweils zwei einander zugekehrten Verlängerungen ein frei beweglich angeordnetes Stützteil für die Federwegbegrenzung vorgesehen ist. Zumindest im Bereich mittlerer Drehzahlen und mittlerer Drehmomentbelastungen kann hierdurch die Grundreibung verringert werden.

In einer bevorzugten Ausführungsform haben die in Reihe geschalteten Schraubenfedern des Satzes unterschiedliche Federsteifigkeiten. Auf diese Weise kann eine geknickte Federkennlinie realisiert werden, bei der die Federsteifigkeit mit zunehmendem Relativdrehwinkel der Schwungräder ansteigt. Die Feder mit der größten Federsteifigkeit liegt zweckmäßigerweise, im Drehmomentfluß gesehen, an erster Position. Der mit dieser Schraubenfeder zusammenwirkende Endschuh und Gleitschuh leistet, bezogen auf den Kanal des ersten Schwungrads bei dieser Ausgestaltung die geringste Reibarbeit. Bei niedriger Belastung und geringer Relativdrehung ergibt sich damit eine extrem niedrige Grundreibung.

Zweckmäßigerweise wird das Drehmoment vom ersten Schwungrad auf den Schraubenfedersatz über beidseitig in der Primärscheibe und der Deckscheibe angeordnete Segmente geleitet, die an den prismatischen Flächen der Endschuhe angepaßte Konturen haben. Die Segmente lassen sich leicht separat herstellen und vor dem Zusammenbau von Primärscheibe, Deckscheibe und Ring an einer geeigneten Stelle der Innenseite von Primärscheibe bzw. Deckscheibe befestigen. Die Befestigung kann durch dichtes Vernieten oder durch Schweißen erfolgen. Für die Kraftweiterleitung von den Endfedern des Schraubenfedersatzes ist bevorzugt eine Nabenscheibe mit radial abstehenden Nasen vorgesehen, die an die prismatischen Flächen der Endschuhe angepaßte Konturen haben. Die Nabenscheibe ist radial innerhalb des Bereichs der Schraubenfedern axial zwischen zwei Seitenscheiben angeordnet und ist mit dem Innenrand ihrer zentrischen Öffnung radial auf umlaufenden Kanten geführt, die an den Seitenscheiben angeformt sind. Die Seitenscheiben sind mit der Nabenscheibe über weitere Federn drehelastisch gekuppelt, die untereinander parallel geschaltet und gegebenenfalls winkelabhängig nacheinander ansteuerbar sind. Während die vorstehend erläuterten Schraubenfedersätze eine erste Federstufe der Drehschwingungsdämpfereinrichtung bilden, bilden die weiteren Federn eine in Reihe zur ersten Federstufe geschaltete, im Raum innerhalb der ersten Federstufe angeordnete zweite Federstufe, die für eine zusätzliche Progressivität der Federkennlinie sorgt.

Die beiden Seitenscheiben sind radial innerhalb der Öffnung der Nabenscheibe axial aufeinander zu gerichtet verformt und liegen angrenzend an die Verformung flach aneinander an. In diesem Bereich sind die Seitenscheiben über Niete fest mit dem zweiten Schwungrad vernietet. Eine solche Ausführungsform ist platzsparend und ermöglicht eine einfache radiale Führung der Nabenscheibe. Zur Verdrehwinkelbegrenzung der zweiten Federstufe können von der zentrischen Öffnung der Nabenscheibe Lappen nach radial innen abstehen, die in umfangsmäßig begrenzte Taschen der beiden Seitenscheiben eingreifen. Zweckmäßigerweise reichen die Taschen nach radial innen jeweils in den Bereich der aneinanderliegenden Flächen der Seitenscheiben hinein und sind in axialer Richtung geringfügig weniger tief ausgeführt als die Materialstärke der Seitenscheiben. Die Verdrehwinkelbegrenzung läßt sich damit im Bereich radial außerhalb der Niete anordnen und nach außen hin flüssigkeitsdicht ausführen. Bevorzugt verläuft das zweite Schwungrad in geringem axialen Abstand neben der Deckscheibe in radialer Richtung. Das zweite Schwungrad ist hierbei im Bereich der Niete mit einem axial auf die Seitenscheiben zu verlaufenden Bund versehen, der mit seinem Innendurchmesser auf ein Lager aufgesetzt ist, das seinerseits auf einem Außendurchmesser der Nabe des ersten Schwungrads sitzt. Der Bund kann damit in axialer Richtung ausreichend lang gemacht werden, ohne den Raumbedarf für die Seitenscheiben der zweiten Federstufe zu sehr zu beschränken. Für die axiale Festlegung des zweckmäßigerweise eine Gegenanpreßplatte für die Reibungskupplung bildenden zweiten Schwungrads gegenüber dem Lager kann einerseits an dem zweiten Schwungrad einteilig ein Flansch vorgesehen sein, während auf der gegenüberliegenden Seite die radial inneren Bereiche der Seitenscheiben für die axiale Fixierung ausgenutzt werden können.

Um ein Auslaufen des viskosen Mediums aus dem Kanal zu verhindern, ist zwischen dem radial inneren Endbereich der Deckscheibe des ersten Schwungrads und der dem zweiten Schwungrad nahen Seitenscheibe der zweiten Federstufe radial zwischen deren Federn und den Nieten eine Dichtung angeordnet. Diese Dichtung wird in vorteilhafter Weise von einem ringförmigen Dichtelement, welches eine Bewegungsdichtung gegenüber der Seitenscheibe bildet einerseits, und einem Tellerfederelement andererseits gebildet, das mit seinem Innendurchmesser an dem Dichtelement und mit seinem Außendurchmesser an der Deckscheibe anliegt, und zwar so, daß an dieser Stelle keine Relativbewegung ausgeführt wird. Auf diese Weise wird einerseits der Austritt von viskosem Medium nach außen verhindert, und zum anderen wird verhindert, daß Schmutz in den Innenraum eindringen kann.

Daß das Tellerfederelement drehfest an der Deckscheibe geführt wird, kann z.B. durch einen hinreichend hohen Reibbeiwert erreicht werden, der in jedem Fall größer sein muß als der Reibbeiwert zwischen dem Dichtelement und der Seitenscheibe. Eine drehfeste Verbindung läßt sich aber auch durch Formschluß zwischen dem Außendurchmesser des Tellerfederelements und der Deckscheibe herstellen. Das Tellerfederelement weist hierzu an seinem Außendurchmesser mehrere radial abstehende Nasen auf, die in entsprechende Aussparungen der Deckscheibe eingreifen. Für die Abdichtung kann radial innerhalb dieses Bereichs ein Auflagewulst am Deckblech vorgesehen sein, an welchem das Tellerfederelement in Umfangsrichtung ohne Unterbrechung aufliegt. Bei einer aus relativ dünnem Blech hergestellten Deckscheibe ist es jedoch auch möglich, aus der Deckscheibe eine mit Unterbrechungen versehene, umlaufende Sicke zur Primärscheibe hin herauszudrücken und die Nasen des Tellerfederelements in die Unterbrechungen eingreifen zu lassen. In diesem Fall ist das Tellerfederelement radial innerhalb der Nasen mit einem umlaufenden Auflagewulst versehen, der an der Deckscheibe dicht aufliegt. Von Vorteil ist in diesem Fall, daß sowohl die Deckscheibe als auch das Tellerfederelement aus relativ dünnwandigen Blechteilen preiswert hergestellt werden können.

Das Dichtelement weist in seinem radial äußeren Bereich bevorzugt einen von der Deckscheibe wegweisenden, umlaufenden Dichtwulst auf, an dem der radial innere Bereich des Tellerfederelements unter Vorspannung anliegt. In seinem radial inneren Bereich ist das Dichtelement mit einem axial über den Dichtwulst vorstehenden, unterbrochenen Fortsatz versehen, in dessen Rücken nach radial innen weisende Nasen des Tellerfederelements eingreifen. Diese drehfeste Verbindung sorgt dafür, daß die Bewegungsdichtung zwischen dem Dichtelement und der Seitenscheibe wirksam ist.

Die Kraftweiterleitung von dem in dem Kanal angeordneten Schraubenfedersatz auf die zentrisch gelagerte Nabenscheibe erfolgt über Nasen, die radial von der Nabenscheibe abstehen. Zwischen den Nasen liegen zumindest einige der Schraubenfedern mit einem radial innenliegenden Teil ihrer Windungen auf der Umfangskontur der Nabenscheibe auf. Die Umfangskontur und die Lage der Schraubenfedern ist so gewählt, daß sich eine radiale Vorspannung der Schraubenfedern nach radial innen zur Drehachse hin ergibt. Diese Vorspannung erlaubt es, ein größeres Federvolumen der Schraubenfedern einzusetzen. Zweckmäßigerweise ist die radiale Vorspannung so auf die Federmasse abgestimmt, daß die Schraubenfeder im Betrieb durch Fliehkraft von der Umfangskontur abhebt. Die Anordnung ist zweckmäßigerweise so getroffen, daß die Schraubenfeder bereits bei der Leerlaufdrehzahl der Brennkraftmaschine abgehoben hat und keinen Beitrag zur Grundreibung während des Betriebs leistet.

Im folgenden wird die Erfindung anhand einer Zeichnung näher erläutert. Hierbei zeigt:
- Fig. 1: einen teilweisen Axialquerschnitt durch ein Zweimassenschwungrad für den Antriebsstrang eines Kraftfahrzeugs;
- Fig. 2a und 2b: eine Schnittansicht des Zweimassenschwungrads, gesehen entlang einer Linie II-II in Fig. 1;
- Fig. 3a bis 3c: einen Gleitschuh in Vorderansicht, Längsschnitt Linie IIIb-IIIb In Fig. 3a) und Draufsicht;
- Fig. 4a bis 4d: einen Endschuh in Vorderansicht, Längsschnitt (Linie IVb-IVb in Fig. 4a), Draufsicht und einen weiteren teilweisen Längsschnitt (Linie IVd-IVd in Fig. 4a);
- Fig. 5 und 6: teilweise Schnittansichten durch den Dichtungsbereich;
- Fig. 7: eine Prinzipdarstellung der Federansteuerung und
- Fig. 8: eine Schnittansicht durch den Führungsbereich einer Nabenscheibe, gesehen entlang einer Linie VIII-VIII in Fig. 1.

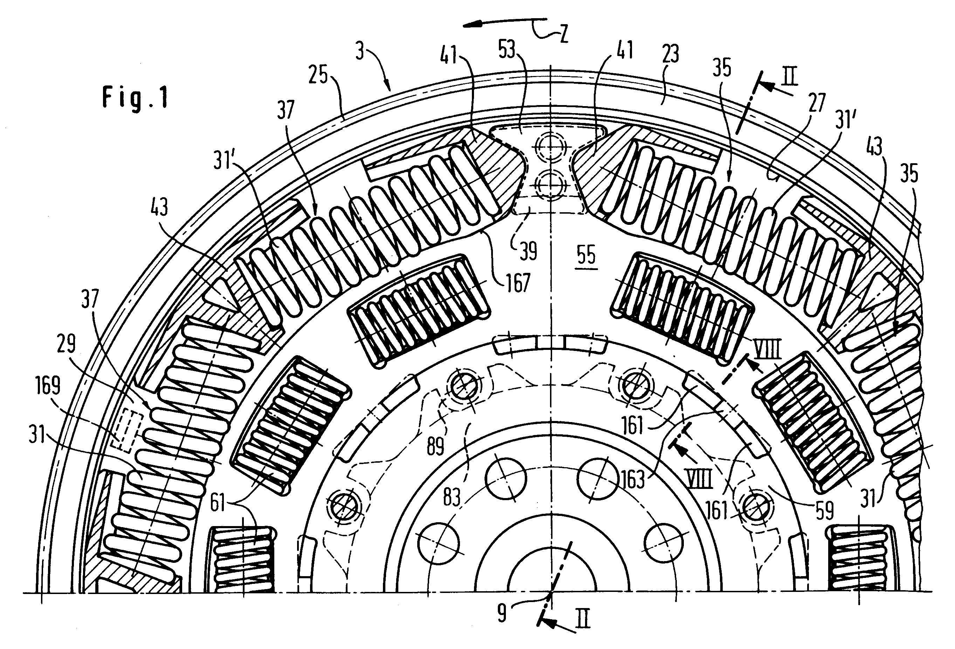

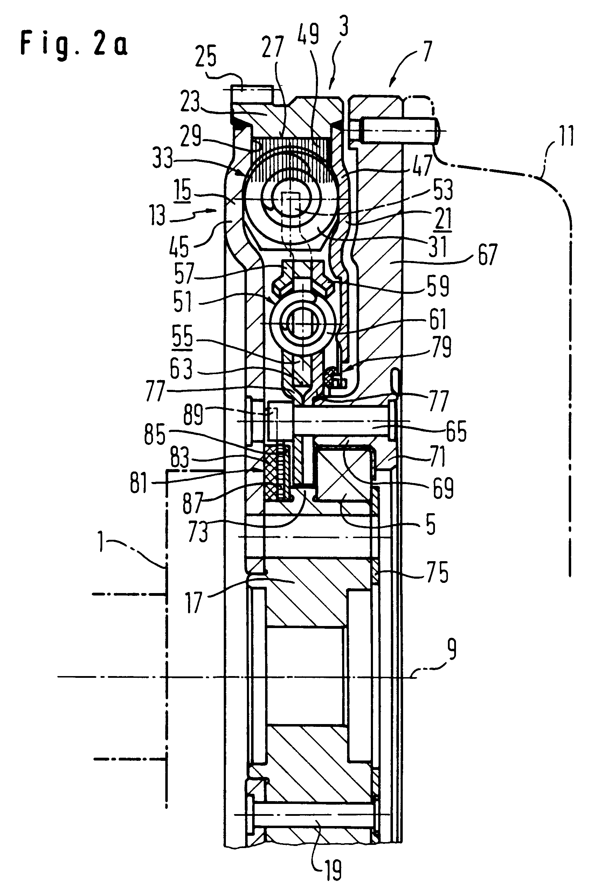

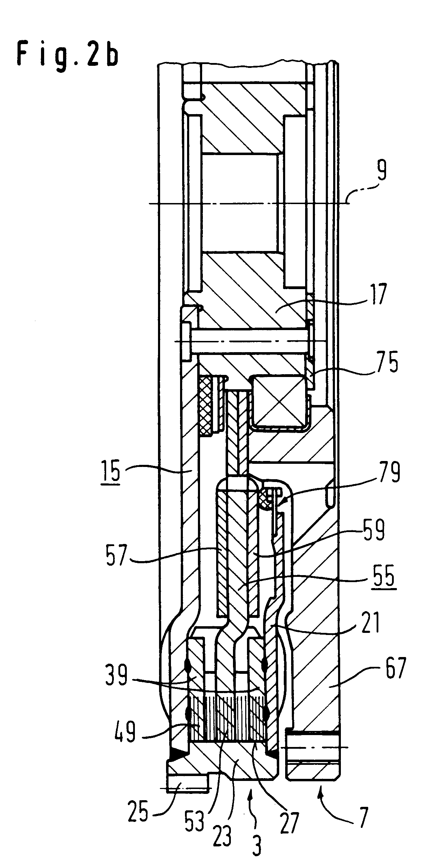

Fig. 1 zeigt einen teilweisen Axialquerschnitt durch ein Zweimassenschwungrad für den Antriebsstrang eines Kraftfahrzeugs, dessen obere Hälfte in Fig. 2a und dessen untere Hälfte in Fig. 2b im Axiallängsschnitt dargestellt ist. Das Zweimassenschwungrad umfaßt ein erstes, an einer Kurbelwelle 1 der Brennkraftmaschine befestigbares Schwungrad 3, an dem mittels eines Lagers 5 ein zweites Schwungrad 7 um eine mit der Kurbelwelle 1 gemeinsame Drehachse 9 drehbar gelagert ist. Das zweite Schwungrad 7 hat im wesentlichen Scheibenform und trägt eine bei 11 angedeutete, herkömmliche Reibungskupplung (Fig. 2a), deren Gegenanpreßplatte es bildet. Eine Drehschwingungsdämpfereinrichtung 13 kuppelt die beiden Schwungräder 3, 7 drehelastisch miteinander.

Das erste Schwungrad 3 ist aus mehreren Teilen zusammengesetzt und umfaßt eine Primärscheibe 15, die mit einer an der Kurbelwelle 1 lösbar befestigten Nabe 17 durch Nieten 19 fest verbunden ist. Das Schwungrad 3 umfaßt ferner eine parallel zur Primärscheibe 15 und im Abstand davon angeordnete Deckscheibe 21, die im Bereich ihres Außenumfangs mit dem Außenumfang der Primärscheibe 15 über einen Ring 23 fest verbunden ist. Am Ring 23 ist außen einteilig ein Anlasserzahnkranz 25 angeformt. Der Ring 23 begrenzt mit seiner zur Drehachse 9 gleichachsigen kreiszylindrischen Innenwandfläche 27 zusammen mit den in diesem Bereich angenähert rechtwinklig dazu verlaufenden Seitenflächen der Primärscheibe 15 und der Deckscheibe 21 einen konzentrisch zur Drehachse 9 umlaufenden Kanal 29, in welchem Schraubenfedern 31 einer ersten Federstufe 33 der Drehschwingungsdämpfereinrichtung 13 angeordnet sind. Die erste Federstufe 33 umfaßt, wie am besten Fig. 1 zeigt, zwei identische und spiegelbildlich angeordnete Federsätze 35, 37, die, wie nachfolgend noch erläutert wird, zueinander parallel im Drehmomentübertragungsweg angeordnet sind. Die Federsätze 35, 37 werden vom ersten Schwungrad 3 her über Segmente 39 (Fig. 2b) angesteuert, die an den Innenseiten der Primärscheibe 15 und der Deckscheibe 21 so angeordnet sind, daß sie unter Zwischenschaltung jeweils eines Endschuhs 41 (Fig. 1) auf die mit 31' gekennzeichneten Endfedern jedes Federsatzes 35, 37 einwirken. Die einzelnen, als zylindrische Schraubenfedern ausgebildeten Federn 31 jedes Federsatzes 35 bzw. 37 sind in Umfangsrichtung untereinander an Gleitschuhen 43 abgestützt. Die Gleitschuhe 43 liegen mit ihrem radial äußeren Bereich an der Innenwandfläche 27 des Ringes 23 an. Wie insbesondere die Fig. 2a und 2b zeigen, ist der durch den Ring 23, die Primärscheibe 15 und die Deckscheibe 21 gebildete ringraumförmige Kanal 29 in axialer Richtung so geformt, daß er die Federn 31 aufnimmt und führt. Im vorliegenden Fall sind die Primärscheibe 15 und die Deckscheibe 21 mit Ausbuchtungen 45, 47 versehen, so daß der Kanal 29 radial außerhalb und radial innerhalb der Federn 31 etwas schmäler ist. Es ist jedoch auch ohne weiteres möglich, den Kanal 29 durch parallel verlaufende, ebene Wände der Primärscheibe 15 und der Deckscheibe 21 zu bilden. Der Raum 29 ist, wie bei 49 angedeutet, mit einem viskosen Medium gefüllt, welches insbesondere als Schmiermittel zur Verringerung der Reibung zwischen den relativ zueinander bewegbaren Bauteilen dient.

Radial innerhalb des Bereichs der ersten Federstufe 33 ist eine zweite Federstufe 51 angeordnet, die durch eine über Nasen 53 mit den Endschuhen 41 der Federsätze 35, 37 gekuppelte Nabenscheibe 55 angesteuert wird. Im dargestellten Ausführungsbeispiel hat die Nabenscheibe 55 zwei radial abstehende Nasen 53, die zwischen die beiden Endschuhe 41 hineinreichen und sich in Ruhestellung der Dämpfereinrichtung 13 mit den Segmenten 39 in axialer Richtung überdecken. Axial beiderseits der Nabenscheibe 55 sind zwei Seitenscheiben 57, 59 angeordnet, die durch Federn 61, welche in Fenstern sowohl der Nabenscheibe 55 als auch der Seitenscheiben 57, 59 gehalten sind, drehelastisch mit der Nabenscheibe 55 gekuppelt sind. Die Nabenscheibe 55 hat eine zur Drehachse 9 zentrische Öffnung 63, in die hinein die beiden Seitenscheiben 57, 59 aufeinander zu verformt sind und in der die innerhalb der Öffnung 63 gelegenen Bereiche der beiden Seitenscheiben 57, 59 flach aneinander anliegen. Die Seitenscheiben 57, 59 sind in diesem Bereich darüber hinaus mittels Nieten 65 mit einem eine Gegenanpreßplatte 67 der Kupplung 11 bildenden Plattenteil des zweiten Schwungrads 7 fest verbunden. Die Gegenanpreßplatte 67 hat im Vernietungsbereich einen zur Primärscheibe 15 hin axial abstehenden Bund 69, mit dem die Gegenanpreßplatte 67 auf das Lager 5 aufgesetzt und axial fixiert ist. Für die axiale Fixierung in einer Richtung trägt die Gegenanpreßplatte 67 einteilig einen radialen Flansch 71, während sie in der anderen axialen Richtung durch den radial inneren Bereich der beiden hier flach aneinanderliegenden Seitenscheiben 57, 59 fixiert ist. An der Nabe 17 ist das Lager 5 durch einen radial abstehenden Flansch 73 der Nabe 17 sowie durch eine mittels der Nieten 19 an der Nabe 17 angenietete Scheibe 75 axial fixiert.

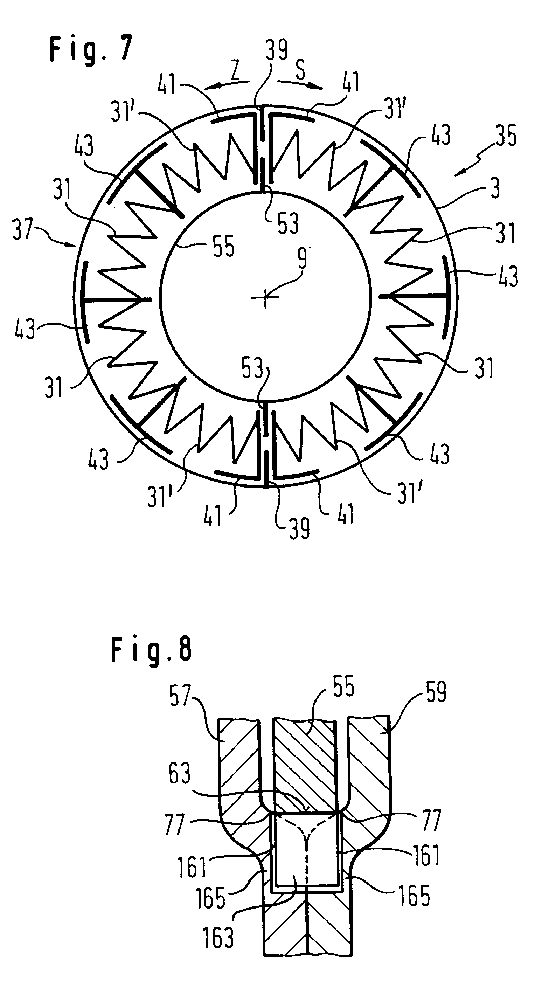

Die beiden Seitenscheiben 57, 59 bilden in ihrem in die Öffnung 63 der Nabenscheibe 55 hinein verformten Bereich jeweils eine umlaufende Kante 77, an der die Nabenscheibe 55 radial geführt ist, wie in Zusammenhang mit Fig. 8 nachfolgend noch beschrieben wird.

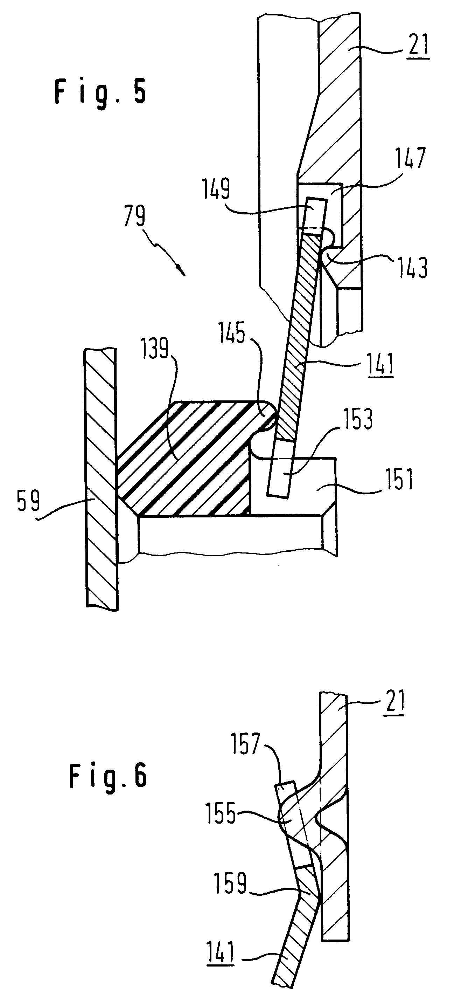

Im Raum zwischen dem radial inneren Endbereich der Deckscheibe 21 und dem Flansch 69 der Gegenanpreßplatte 67 ist eine Dichtung 79 angeordnet, die den Austritt des viskosen Materials 49 und den Eintritt von Schmutz verhindert. Ausführungsformen der Dichtung 79 werden nachfolgend anhand der Fig. 5 und 6 noch erläutert.

Auf der dem Lager 5 axial abgewandten Seite ist in dem Bereich, in welchem die Seitenscheiben 57, 59 flach aneinander anliegen, eine Reibeinrichtung 81 angeordnet, die im dargestellten Ausführungsbeispiel eine Reibscheibe 83, eine axial wirkende Feder 85 und eine Zwischenscheibe 87 umfaßt und zwischen dem Flansch 73 und der Primärscheibe 15 eingespannt ist. Die Reibeinrichtung 81 ist für den Lastbetrieb bemessen und wirkt erst nach Zurücklegen eines vorbestimmten Relativdrehwinkels zwischen den beiden Schwungrädern 3, 7, wozu der Reibring 83 mit Spiel in Umfangsrichtung durch Fortsätze 89 mit Köpfen der Nieten 65 gekuppelt ist.

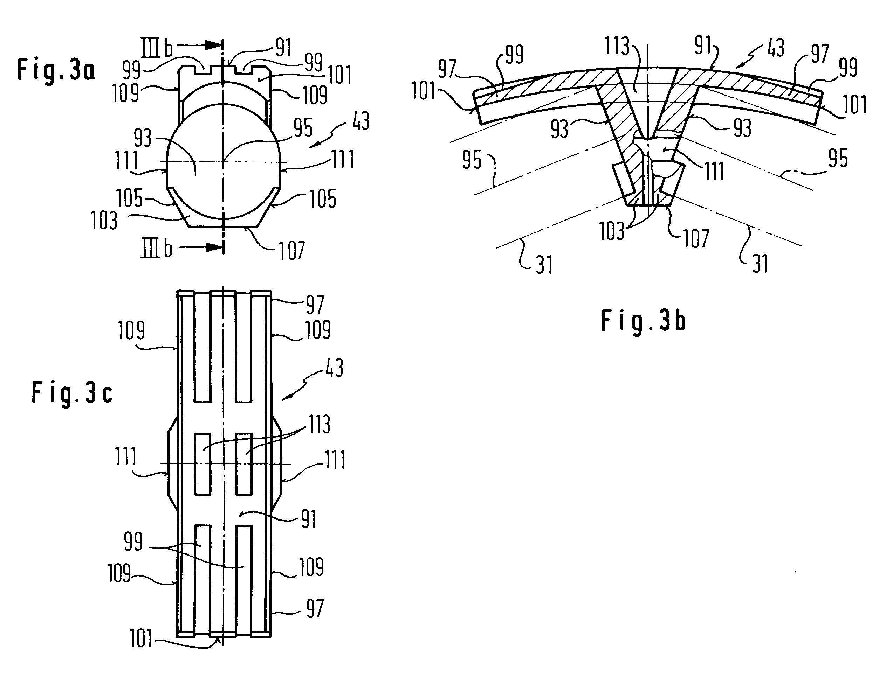

Die Fig. 3a, 3b und 3c zeigen eine Vorderansicht eines der Gleitschuhe 43, gesehen von der daran anliegenden Feder 31 her (Fig. 3a), eine Schnittansicht des Gleitschuhs (Fig. 3b) und eine Draufsicht auf den Gleitschuh, gesehen von radial außen her (Fig. 3c). Die Gleitschuhe 43 erlauben es, anstelle einer langen, insbesondere vorgekrümmten Feder, mehrere kurze, zylindrische Federn hintereinander zu schalten, ohne daß diese Federn direkt in Reibkontakt mit der Innenwandfläche 27 des ersten Schwungrads 3 kommen. Jeder Gleitschuh 43 weist nach radial außen hin einen gewölbten Bereich 91 auf, dessen Krümmungsradius entweder gleich oder geringfügig kleiner als der Radius der Innenwandfläche 27 ist. Jeder Gleitschuh 43 hat zwei ebene Federauflageflächen 93, die im wesentlichen senkrecht zur Achse 95 (Fig. 3b) der Federn 31 verlaufen und an denen sich die Federn 31 mit ihren Stirnenden abstützen. Auf der radial äußeren Seite der Federn 31 ist der Gleitschuh 43 in beiden Umfangsrichtungen mit Verlängerungen 97 versehen, die die Federn 31 nach radial außen hin stützen. Die Verlängerungen 97 sind nach radial außen hin mit Schmiernuten 99 versehen. Die Schmiernuten 99 sind nach radial außen hin offen, haben ihre größte Tiefe jeweils am Stirnende 101 der Verlängerung 97 und laufen in Richtung auf die Mitte des Gleitschuhs 43 zu aus. Die Schmiernuten 99 dienen dem Aufbau eines Schmierkeils bei Relativbewegung zwischen dem Gleitschuh 43 und dem ersten Schwungrad 3.

Wie am besten die Fig. 3a und 3b zeigen, hat der Gleitschuh 43 auf der zur Drehachse gelegenen Seite der Federachse 95 Federführungsfortsätze 103, die die Federn 31 nach radial innen hin führen. Im dargestellten Ausführungsbeispiel erstrecken sich die Federführungsfortsätze 103 nur über einen Teil der Umfangslänge der Federn 31 und sind durch ebene Flächen 105, 107 nach außen hin abgeschlossen. Die Außenflächen können alternativ auch bogenförmig um die Federachse 95 herumgekrümmt sein, und die Federführungsfortsätze 103 können gegebenenfalls bis an die Verlängerungen 97 heranreichen.

Jeder Gleitschuh 43 weist im Bereich seiner Verlängerungen 97 seitliche Führungsflächen 109 auf, mit welchen er an der Primärscheibe 15 bzw. der Deckscheibe 21 axial geführt ist. In seinem zwischen den Federauflageflächen 93 gelegenen Hauptteil ist jeder Gleitschuh 43 mit zusätzlichen seitlichen Führungsflächen 111 versehen, die sich etwa auf der radialen Höhe der Federachsen 95 befinden. Die Führungsflächen 111 verhindern eine Drehbewegung der Gleitschuhe 43 im Kanal 29 des ersten Schwungrads 3.

Zumindest an dem an der Innenwandfläche 27 des Rings 23 anliegenden Bereich 91 sind die Gleitschuhe 43 gleitgünstig ausgebildet, um eine möglichst niedrige Reibung sicherzustellen. Zusätzlich ist die Innenwandfläche 27 beispielsweise durch rollen so behandelt, daß sie eine möglichst glatte Oberfläche hat. Durch das Rollen der Oberfläche kann diese in gewissem Umfang verdichtet werden, wodurch der Verschleiß vermindert und eine sehr glatte Oberfläche erreicht wird. In ihrem mittleren Bereich sind die Gleitschuhe 43 zur Verringerung des Gewichts mit Aussparungen 113 versehen.

Bei einer Relativdrehung der beiden Schwungräder 3, 7 gleiten die Gleitschuhe 43 mit ihren gewölbten Bereichen 91 an der Innenwandfläche 27 des ersten Schwungrads 3 entlang. Die Verlängerungen 97 verringern hierbei die Flächenpressung gegenüber der Innenwandfläche 27 und führen die Federn 31 auch bei hohen Drehzahlen im Abstand von der Innenwandfläche 27. Die Federn 31 können damit die Innenwandfläche 27 nicht berühren. Zugleich dienen die Stirnenden 101 als Verdrehwinkelanschlag, so daß eine maximale Kompression der Federn 31 exakt eingehalten werden kann.

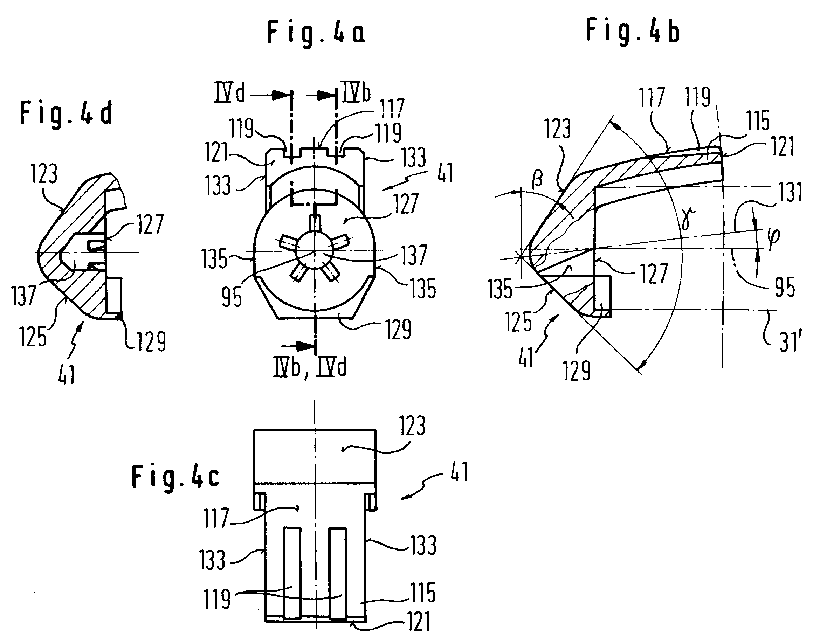

Die Endfedern 31' (Fig. 1), die mit den Nasen 53 der Nabenscheibe 55 sowie den Segmenten 39 zusammenarbeiten, sind über die in den Fig. 4a bis 4d im einzelnen dargestellten Endschuhe 41 abgestützt. Soweit es die unmittelbar die Federn 31' führenden Komponenten der Endschuhe 41 betrifft, sind sie ähnlich den Gleitschuhen 43 aufgebaut, haben jedoch lediglich eine über die Feder 31' hinweggreifende Verlängerung 115. Die Verlängerung 115 ist nach radial außen hin wiederum durch einen gewölbten Bereich 117 begrenzt, dessen Krümmungsradius dem Radius der Innenwandfläche 27 angepaßt ist. Auch sind in den Verlängerungen 115 wiederum den Schmiernuten 99 entsprechende Schmiernuten 119 vorgesehen. Das Stirnende 121 der Verlängerung 115 wirkt mit dem Stirnende 101 des in Umfangsrichtung jeweils benachbarten Gleitschuhs 43 als Anschlag für die Begrenzung der maximalen Kompression der Feder 31' zusammen. Für die Ansteuerung durch die Segmente 39 und die Nasen 53 ist der Endschuh 41 prismenförmig ausgebildet und hat zwei unter einem Winkel γ gegeneinander geneigte Prismenflächen 123, 125, die von der Feder 31' in Umfangsrichtung weg aufeinander zu verlaufen. Die Prismenflächen 123, 125 sind im wesentlichen eben und erstrecken sich parallel zur Drehachse 9. Die zur Anlage an den Prismenflächen 123, 125 bestimmten Umfangskanten der Segmente 39 bzw. der Nasen 53 sind komplementär an die Prismenflächen 123, 125 angepaßt. Die Endfeder 31' liegt mit ihrem Stirnende an einer ebenen Federauflagefläche 127 an und wird der Verlängerung 115 gegenüberliegend nach radial innen hin durch einen Federführungsfortsatz 129 geführt. Die Federauflagefläche 127 ist eben und verläuft senkrecht und verläuft bei unbelastetem Zweimassenschwungrad im wesentlichen senkrecht zur Federachse 95. Bei Kompression der Feder 31' ändert sich die Lage der Federachse relativ zum Endschuh 41. Mit 131 ist eine bei maximaler Kompression der Feder 31' unter einem spitzen Winkel φ zur Federachse 95 verlaufende Gerade bezeichnet, die im wesentlichen in Richtung der Federachse bei maximaler Kompression verläuft. Der Winkel β zwischen der radial äußeren Prismenfläche 123 und der Federauflagefläche 127 ist so bemessen, daß die Gerade 131, gesehen in einer senkrecht zur Drehachse 9 verlaufenden Schnittebene, einerseits durch den Schnittpunkt der Prismenflächen 123, 125 in dieser Schnittebene und andererseits durch den Schnittpunkt der Federauflagefläche 127 und der Federachse 95 verläuft. Durch diese geometrische Festlegung wird die maximale Belastung des Endschuhs 41 im Bereich seiner Prismenflächen 123, 125 minimal, da bei höchster Kraftbeaufschlagung der Feder 31', d.h. bei der Übertragung des maximalen Drehmoments die Federkraft in Richtung der Geraden 131 in das Prismenzentrum geleitet wird.

Die Federführungsfortsätze 129 der Endschuhe 41 sind entsprechend den Federführungsfortsätzen 103 der Gleitschuhe 43 gestaltet. Insbesondere kann der Federführungsfortsatz sich nur über einen Teil der Umfangsfläche der Feder 31' erstrecken, und auch seine Außenkontur kann entsprechend dem Federführungsfortsatz 103 gestaltet sein. Anstelle der die Federn 31' außen umfangenden Federführungsfortsätze 129 kann, wie auch im Fall des Gleitschuhs 43, ein zur Federachse 95 zentrischer Zapfen vorgesehen sein, der in das Stirnende der Feder eingreift. Hierbei entfällt allerdings der Vorteil der Federführungsfortsätze 103, 129, mehrere Schraubenfeder koaxial ineinander anordnen zu können. Die Endschuhe 41 werden analog zu den Gleitschuhen 43 zum einen über Seitenflächen 133 ihres Fortsatzes 115 und zum anderen durch Seitenflächen 135 ihrer Prismenkörper an der Primärscheibe 15 bzw. der Deckscheibe 21 kippsicher geführt. Die Seitenflächen 135 sind etwa auf der radialen Höhe der Federachse 95 vorgesehen. Zur Gewichtsoptimierung ist im Prismenkörper eine Aussparung 137 vorgesehen, wie am besten die Fig. 4a und 4d zeigen.

Die Endschuhe 41 sind über ihre Prismenflächen 123, 125 an den Nasen 53 der Nabenscheibe 55 bzw. den Segmenten 39 des ersten Schwungrads 3 so abgestützt, daß sie mit ihrem gewölbten Bereich 117 nicht an der Innenwandfläche 27 im Ruhezustand anliegen. Damit ist gewährleistet, daß bei geringen Drehmomenten die Grundreibung sehr gering bleibt. Durch geeignete Bemessung des Winkels β abhängig vom Reibbeiwert zwischen dem Endschuh 41 einerseits und den ebenfalls prismatischen Steuerkanten der Nasen 53 bzw. der Segmente 39 und ferner abhängig vom Gewicht des Endschuhs 41 und der daran geführten Feder 31' wird erreicht, daß der Endschuh 41 entlang der Prismenfläche 123 oberhalb einer vorbestimmten Drehzahl fliehkraftbedingt nach radial außen wandert, wodurch sein gewölbter Bereich 117 in Reibkontakt mit der Innenwandfläche 27 kommt. Auf diese Weise kann drehzahlabhängig der Einsatz einer zusätzlichen Reibungsstufe gesteuert werden. Zweckmäßigerweise sind die Verhältnisse so getroffen, daß der Reibkontakt bereits bei der Leerlaufdrehzahl der Brennkraftmaschine hergestellt ist.

Fig. 5 zeigt Einzelheiten der Dichtung 79 zwischen der Deckscheibe 21 und der ihr axial benachbarten Seitenscheibe 59. Die Dichtung 79 umfaßt ein in Form einer Bewegungsdichtung an der Seitenscheibe 59 anliegendes, ringförmiges Dichtelement 139, vorzugsweise aus einem elastischen Material, welches von einem ringscheibenförmigen Tellerfederelement 141 axial gegen die Seitenscheibe 59 gespannt wird. Das Tellerfederelement 141 liegt im Bereich seines Außenumfangs dicht an einem Dichtwulst 143 der Deckscheibe 21 und im Bereich seines Innenumfangs an einem Dichtwulst 145 an, der im radial äußeren Bereich auf der von der Seitenscheibe 59 axial abgewandten Seite an dem Dichtelement 139 vorgesehen ist. Radial außerhalb des ringförmigen Dichtwulstes 143 ist die Deckscheibe 21 mit in Umfangsrichtung verteilten Aussparungen 147 versehen, in welche vom Außenrand des Tellerfederelements 141 abstehende Nasen 149 für die Drehsicherung eingreifen. Das Dichtelement 139 ist seinerseits drehfest an dem Tellerfederelement 141 geführt und trägt radial innerhalb des ringförmigen Dichtwulstes 145 axial verlaufende Fortsätze 151, zwischen die vom Tellerfederelement 141 nach radial innen abstehende Nasen 153 zur Verdrehsicherung eingreifen. Anstelle der Verdrehsicherung des Tellerfederelements 141 relativ zur Deckscheibe 21 durch Aussparungen 147 und Nasen 149 kann das Tellerfederelement 141 auch durch Reibung drehfest relativ zum Dichtwulst 143 geführt sein. Die Deckscheibe 21 und das Tellerfederelement 141 bestehen üblicherweise aus Metall und haben damit einen höheren Reibbeiwert als das an der Seitenscheibe 59 gleitende Dichtelement 139.

Fig. 6 zeigt eine Variante der Dichtung 79 für die Abdichtung des Tellerfederelements 141 relativ zur Deckscheibe 21. Die Deckscheibe 21 ist als vergleichsweise dünnwandiges Blechteil ausgebildet und mit einer umlaufenden, unterbrochenen, aber dicht ausgebildeten Sicke 155 versehen. Das Tellerfederelement 141 greift zur Verdrehsicherung mit radial abstehenden Nasen 157 in die Unterbrechungen der Sicke 155 ein. Radial innerhalb des Bereichs der Sicke 155 ist an dem Tellerfederelement 141 ein Auflagewulst 159 angeformt, mit dem das Tellerfederelement 141 an der Deckscheibe 21 abgedichtet anliegt.

Fig. 8 zeigt Einzelheiten des die Nabenscheibe 55 führenden Bereichs der Seitenscheiben 57, 59. Die Nabenscheibe 55 ist mit ihrer zentrischen Öffnung 63 auf den Kanten 77 der Seitenscheiben 57, 59 radial geführt. Die Kanten 77 sind dadurch gebildet, daß die Seitenscheiben 57, 59 radial innerhalb der Öffnung 63 aufeinander zu verformt sind und in dem nach radial innen zu anschließenden Bereich flach aneinander anliegen. In dem Übergangsbereich der Verformung der Seitenscheiben 57, 59 sind mehrere in Umfangsrichtung verteilte, mit der Öffnung 63 der Nabenscheibe 55 überlappende Taschen 161 in beiden Seitenscheiben 57, 59 vorgesehen. Die Taschen 161 der beiden Seitenscheiben 57, 59 liegen sich axial gegenüber und nehmen Lappen 163 in sich auf, die vom Innenrand der Öffnung 63 der Nabenscheibe 55 nach radial innen abstehen. In Umfangsrichtung bilden die Taschen 161 Anschläge für die Verdrehbegrenzung der Nabenscheibe 55 relativ zu den Seitenscheiben 57, 59. Die Taschen 161 sind gerade so tief in das Material der Seitenscheiben 57, 59 eingearbeitet, daß einerseits die axiale Beweglichkeit der Nabenscheibe 55 nicht gefährdet ist und andererseits jeweils ein dünnwandiger Boden 165 verbleibt, der den Austritt von viskosem Material an dieser Stelle verhindert.

Fig. 7 zeigt eine Prinzipdarstellung der ersten Federstufe 13 der Drehschwingungsdämpfereinrichtung. Zwischen zwei im wesentlichen diametral sich gegenüberliegenden Nasen 53 der Nabenscheibe 55 erstrecken sich, abgestützt über je zwei Endschuhe 41, zwei Federsätze 35, 37 aus mehreren hintereinander angeordneten und über die Gleitschuhe 43 aneinander abgestützten und in Reihe geschalteten Federn 31. Die an den Endschuhen 41 anliegenden, endständigen Federn sind wiederum mit 31' bezeichnet. Im dargestellten Ausführungsbeispiel sind pro Satz je 4 Federn vorgesehen; die Federzahl kann jedoch abweichend gewählt werden, sofern mehr als zwei über einen Gleitschuh aneinander abgestützte Federn eingesetzt werden. Auch kann die Anzahl der Sätze variieren. Im Einzelfall kann ein einziger Federsatz vorgesehen sein, oder es können auch mehr als zwei Federsätze vorhanden sein.

Die Federn jedes Federsatzes können gleiche Federsteifigkeit haben. In einer bevorzugten Ausführungsform hat jedoch zumindest eine der Federn jedes Federsatzes eine von der Federsteifigkeit der übrigen Federn des Satzes abweichende Federsteifigkeit. Bei Verwendung von Federn unterschiedlicher Steifigkeit kann der Einsatz der von den Gleitschuhen 43 ausgehenden Reibung gezielt beeinflußt werden. Hat die im Drehmomentweg an erster Position liegende Feder 31' eine größere Federsteifigkeit als die im Drehmomentfluß dahinterliegende Feder, so bewegt sich der an der Feder 31' anliegende Gleitschuh 43 aufgrund der größeren Steifigkeit dieser Feder zunächst zusammen mit dem das Drehmoment einleitenden Teil, während die Kompression im Bereich der geringer steifen Federn erfolgt. Bei Einleitung des Drehmoments über das erste Schwungrad 3 im Zugbetrieb der Brennkraftmaschine, d.h. in Richtung eines Pfeils Z in Fig. 7, bewegt sich die in Richtung Z gelegene Endfeder 31' zusammen mit ihrem Endschuh 41 sowie dem an ihr anliegenden Gleitschuh 43 mehr oder weniger drehsteif zusammen mit dem Schwungrad 3. Der Endschuh 41 und die Feder 31' führt damit keine Relativbewegung und der zugehörige Gleitschuh 43 nur eine geringe Relativbewegung bezogen auf das Schwungrad 3 aus. Damit wird erreicht, daß im Zugbetrieb bei kleinen und mittleren Drehmomenten eine vergleichsweise geringe Reibung erzeugt wird. Die Torsionsschwingungsdämpfung läßt sich auf diese Weise komfortabler gestalten. Wird hingegen die in Fig. 7 obere, endständige Feder 31' des Federsatzes 35 mit einer erhöhten Federsteifigkeit, d.h. einer steileren Federkennlinie bezogen auf die übrigen Federn des Federsatzes 35 ausgestattet, so läßt sich derselbe Effekt im Schubbetrieb bei Drehmomenteinleitung in das Schwungrad 3 in Richtung des Pfeiles S erzielen. In jedem Fall wird die Reibarbeit verringert, wenn Federn mit größerer Federsteifigkeit im Momentenfluß gesehen vor den Federn mit geringerer Federsteifigkeit eingebaut werden.

Wie Fig. 1 zeigt, liegen die Federn 31 und 31' in der Ruhestellung des Zweimassenschwungrads mit dem radial inneren Bereich ihrer Federwindungen auf der zwischen den Nasen 53 sich erstreckenden Umfangskontur 167 der Nabenscheibe 55 unter radialer Vorspannung auf. Aufgrund der radialen Vorspannung können in Umfangsrichtung etwas längere Federn eingebaut werden, so daß das Federvolumen auf diese Weise vergrößert werden kann. Durch geeignete Bemessung der Vorspannung bezogen auf das Gewicht der Federn 31 ist aber sichergestellt, daß bei Leerlaufdrehzahl die Federn 31, 31' von der Umfangskontur 167 bereits abgehoben haben, um in diesem Betriebszustand keine zusätzliche Reibung zu erzeugen.

Wie Fig. 1 zeigt, können radial außerhalb des Bereichs der Federn 31, 31' in Umfangsrichtung zwischen den Verlängerungen der Endschuhe 41 bzw. Gleitschuhe 43 Stützteile 169 vorgesehen sein, über die die Verlängerungen zur Begrenzung der maximalen Kompression der Federn 31, 31' aneinander anschlagen. Bei Verwendung derartiger Stützteile 169 können die Verlängerungen gegebenenfalls verkürzt werden, wodurch das Gewicht der Endschuhe 41 bzw. Gleitschuhe 43 verringert werden kann.

## Patentansprüche

1. Zweimassen-Schwungrad zur Anordnung im Antriebsstrang eines von einer Brennkraftmaschine angetriebenen Kraftfahrzeugs, umfassend
- ein an einer Kurbelwelle (1) der Brennkraftmaschine gleichachsig zu deren Drehachse (9) befestigbares, erstes Schwungrad (3),
- ein relativ zu dem ersten Schwungrad (3) gleichachsig drehbar gelagertes, zweites Schwungrad (7) als Träger einer Reibungskupplung (11) in dem Antriebsstrang und
- eine die beiden Schwungräder (3, 11) drehelastisch miteinander kuppelnde Drehschwingungsdämpfereinrichtung (13) mit mehreren in einem bogenförmig um die Drehachse (9) herum verlaufenden Kanal (29) des ersten Schwungrads (3) auf einem gemeinsamen mittleren Durchmesser angeordneten Schraubenfedern (31), wobei
die Drehschwingungsdämpfereinrichtung (13) wenigstens einen die beiden Schwungräder (3, 7) drehelastisch miteinander kuppelnden Satz (35, 37) aus wenigstens zwei einzelnen Schraubenfedern (31) aufweist, die hintereinander in dem Kanal (29) angeordnet sind, **dadurch gekennzeichnet,** daß diese Schraubenfedern (31) in Reihe geschaltet sind und zwischen einander zugewandten Stirnenden von in Umfangsrichtung benachbarter Schraubenfedern (31) des Satzes (35, 37) jeweils ein relativ zu den beiden Schwungrädern (3, 7) beweglicher Gleitschuh (43) angeordnet ist, der die einander zugewandten Stirnenden der benachbarten Schraubenfedern (31) in dem Kanal (29) führt.

2. Zweimassen-Schwungrad nach Anspruch 1, dadurch gekennzeichnet, daß die in Umfangsrichtung äußersten Stirnenden der Schraubenfeder (31') jedes Satzes (35, 37) zur Kraftübertragung an Endschuhen (41) geführt sind, daß die Endschuhe (41) und die Gleitschuhe (43) die Schraubenfedern (31) des Satzes (35, 37) in radialem Abstand zu einer den Kanal (29) nach radial außen begrenzenden Innenwandfläche (27) des ersten Schwungrads (3) führen und daß der Kanal (29) zumindest teilweise mit einem viskosen Material (49), insbesondere einem Schmiermittel, gefüllt ist.

3. Zweimassen-Schwungrad nach Anspruch 2, dadurch gekennzeichnet, daß die Endschuhe (41) und/oder die Gleitschuhe (43) bogenförmig um die Drehachse (9) herum gekrümmte, radial äußere Führungsflächen (91, 117) haben, mit welchen sie zumindest in Rotationsbetrieb an der den Kanal (29) radial außen begrenzenden Innenwandfläche (27) gleitend anliegen.

4. Zweimassen-Schwungrad nach Anspruch 3, dadurch gekennzeichnet, daß die Endschuhe (41) und/oder die Gleitschuhe (43) in Umfangsrichtung vorstehende Verlängerungen (97, 115) aufweisen, die radial zwischen die den Kanal (29) begrenzende Innenwandfläche (27) und die Schraubenfeder (31) greifen und daß die radial äußeren Führungsflächen (91, 117) in Umfangsrichtung zumindest angenähert die Verlängerungen (97, 115) überdecken.

5. Zweimassen-Schwungrad nach Anspruch 4, dadurch gekennzeichnet, daß die Endschuhe (41) und/oder Gleitschuhe (43) im wesentlichen ebene Auflageflächen (93, 127) für das Stirnende der Schraubenfeder (31) haben, wobei die Auflagefläche (93, 127) angenähert senkrecht zur Federachse (95) verläuft und im wesentlichen kreisförmige Kontur hat, und daß auf der von der Verlängerung (97, 115) fernen Seite jeder Auflagefläche (93, 127) ein Federführungsfortsatz (103, 129) absteht, der in Umfangsrichtung kürzer als die Verlängerung (97, 115) ist.

6. Zweimassen-Schwungrad nach Anspruch 4 oder 5, dadurch gekennzeichnet, daß zumindest im Bereich der Verlängerung (97, 115) in der bogenförmig gekrümmten, radial äußeren Führungsfläche (91, 117) der Endschuhe (41) und/oder der Gleitschuhe (43) wenigstens eine Schmiernut (99, 119), insbesondere mehrere axial nebeneinander angeordnete Schmiernuten vorgesehen sind, deren Tiefe von dem über der Schraubenfeder (31) gelegenen Führungsflächenrand der Verlängerung (97, 115) zum Stirnende der Schraubenfeder (31) hin abnimmt.

7. Zweimassen-Schwungrad nach einem der Ansprüche 3 bis 5, dadurch gekennzeichnet, daß der Krümmungsradius der zur Anlage an der den Kanal (29) begrenzenden Innenwandfläche (27) bestimmten Bereiche der radial äußeren Führungsflächen (91, 117) der Endschuhe (41) und/oder Gleitschuhe (43) gleich oder geringfügig kleiner ist als der Radius der Innenwandfläche (27).

8. Zweimassen-Schwungrad nach einem der Ansprüche 3 bis 7, dadurch gekennzeichnet, daß zumindest der zur Anlage an der Innenwandfläche (27) bestimmte Bereich der Führungsfläche (91, 117) der Endschuhe (41) und/oder der Gleitschuhe (43) aus einem gleitgünstigen Material besteht.

9. Zweimassen-Schwungrad nach Anspruch 8, dadurch gekennzeichnet, daß die Endschuhe (41) und/oder die Gleitschuhe (43) aus Metall bestehen und zumindest im Bereich ihrer radial äußeren Führungsfläche (91, 117) gehärtet sind oder eine Schicht aus gleitgünstigem Material tragen.

10. Zweimassen-Schwungrad nach Anspruch 8, dadurch gekennzeichnet, daß die Endschuhe (41) und/oder die Gleitschuhe (43) aus Kunststoff hergestellt sind.

11. Zweimassen-Schwungrad nach Anspruch 10, dadurch gekennzeichnet, daß die Endschuhe (41) und/oder die Gleitschuhe (43) aus faserverstärktem Kunststoff hergestellt sind und zumindest im Bereich ihrer der radial äußeren Führungsfläche (91, 117) mit einer gleitgünstigen Auflage beschichtet sind oder eine Beimischung aus gleitgünstigem Material, insbesondere Teflon, enthalten.

12. Zweimassen-Schwungrad nach einem der Ansprüche 2 bis 11, dadurch gekennzeichnet, daß die Endschuhe (41) und/oder die Gleitschuhe (43) in Umfangsrichtung des ersten Schwungrads (3) vorstehende Verlängerungen (97, 115) aufweisen, die radial zwischen die den Kanal (29) nach radial außen begrenzende Innenwandfläche (27) und einen an das von dem Schuh (41, 43) geführte Stirnende der Schraubenfeder (31) anschließenden Bereich der Schraubenfeder (31) hineinreichen.

13. Zweimassen-Schwungrad nach Anspruch 12, dadurch gekennzeichnet, daß die Verlängerungen (97, 115) der Endschuhe (41) und/oder der Gleitschuhe (43) Anschläge (101, 121) bilden, die die maximale Kompression der Schraubenfedern (31) bestimmen.

14. Zweimassen-Schwungrad nach Anspruch 13, dadurch gekennzeichnet, daß in Umfangsrichtung des ersten Schwungrads (3) zwischen den Verlängerungen (97, 115) der beiden Schuhe (41, 43) wenigstens einer der Schraubenfedern (31) ein Stützteil (169) lose verschiebbar angeordnet ist, über das sich die Verlängerungen (97, 115) bei der Begrenzung der Kompression der Schraubenfeder (31) aneinander abstützen.

15. Zweimassen-Schwungrad nach einem der Ansprüche 1 bis 14, dadurch gekennzeichnet, daß wenigstens eine der Schraubenfedern (31') zumindest eines Satzes (35, 37) eine Federsteifigkeit hat, die sich von der Federsteifigkeit der restlichen Schraubenfedern (31) des Satzes (35, 37) unterscheidet.

16. Zweimassen-Schwungrad nach Anspruch 15, dadurch gekennzeichnet, daß die Schraubenfeder (31') mit der größten Federsteifigkeit im Drehmomentübertragungsweg der hintereinander angeordneten Schraubenfedern (31) des Satzes (35, 37) an erster Position bezogen auf die das Drehmoment einleitende Komponente der Drehschwingungsdämpfereinrichtung (13) angeordnet ist.

17. Zweimassen-Schwungrad nach einem der Ansprüche 1 bis 16, dadurch gekennzeichnet, daß die in Umfangsrichtung äußersten Stirnenden der Schraubenfedern (31') jedes Satzes (35, 37) zur Kraftübertragung an Endschuhen (41) geführt sind, deren Federauflagefläche (127) im Ruhezustand der Drehschwingungsdämpfereinrichtung (13) zumindest angenähert senkrecht zur Achse (95) der Schraubenfeder (31') verläuft und
daß die Drehschwingungsdämpfereinrichtung (13) die Endschuhe (41) an Steuerelementen (39, 53) führt, wobei die Endschuhe (41) und Steuerelemente (39, 53) einander zugeordnete, komplementär geformte, prismatische Führungen aufweisen, von denen jede zwei - gesehen in einer die Schraubenachse enthaltenden Ebene senkrecht zur Drehachse - gegeneinander geneigte Prismenflächen umfaßt und wobei die Prismenflächen (123, 125) des Endschuhs (41) relativ zur Federauflagefläche (127) derart angeordnet sind, daß eine einerseits durch den Schnittpunkt der Prismenflächen (123, 125) und andererseits durch den Schnittpunkt der Federachse (95) und der Ebene der Federauflagefläche (127) unter einem spitzen Winkel zur Ruhezustandrichtung der Federachse (95) verlaufende Gerade (131) zumindest angenähert in Richtung der Federachse bei maximal komprimierter Schraubenfeder (31') verläuft.

18. Zweimassen-Schwungrad nach Anspruch 17, dadurch gekennzeichnet, daß jeder Endschuh (41) eine radial zwischen eine den Kanal (29) radial außen begrenzende Innenwandfläche (27) des ersten Schwungrads (3) und die Schraubenfeder (31') reichende Verlängerung (115) aufweist, die im Ruhezustand der Drehschwingungsdämpfereinrichtung (13) in radialem Abstand von der Innenwandfläche (27) verläuft.

19. Zweimassen-Schwungrad nach Anspruch 18, dadurch gekennzeichnet, daß die radial äußere (123) der beiden Prismenflächen (123, 125) des Endschuhs (41) schräg zur Federauflagefläche (127) geneigt verläuft, wobei dieser Neigungswinkel, die Reibbeiwerte der Materialien des Endschuhs (41) und der Steuerelemente (39, 53) und die Vorspannung der Schraubenfeder (31') so bemessen sind, daß die Verlängerung (115) bei Überschreiten einer vorgegebenen Betriebsdrehzahl infolge Fliehkraft nach radial außen wandert und an der Innenwandfläche (27) anliegt.

20. Zweimassen-Schwungrad nach einem der Ansprüche 1 bis 19, dadurch gekennzeichnet, daß die Drehschwingungsdämpfereinrichtung (13) für die Weiterleitung des Drehmoments von den Schraubenfedern (31) jedes Satzes (35, 37) zum zweiten Schwungrad (7) eine relativ zum ersten Schwungrad (3) drehbar gelagerte Nabenscheibe (55) aufweist, von der mit den in Umfangsrichtung äußersten Stirnenden der Schraubenfedern (31') jedes Satzes (35, 37) zusammenwirkende Nasen (53) radial nach außen abstehen, und daß die Schraubenfedern (31) um den Umfang der Nabenscheibe (55) herum verteilt angeordnet sind und daß zumindest eine Schraubenfeder (33) jedes Satzes (35, 37) in Ruhestellung der Drehschwingungsdämpfereinrichtung (13) mit radialer Vorspannung am Umfang der Nabenscheibe (55) aufliegt.

21. Zweimassen-Schwungrad nach Anspruch 20, dadurch gekennzeichnet, daß die radiale Vorspannung derart auf die Masse der am Umfang der Nabenscheibe (55) anliegenden Schraubenfeder (33) abgestimmt ist, daß die Schraubenfeder (33) in Betrieb infolge von Fliehkräften vom Umfang der Nabenscheibe (55) abhebt.

22. Zweimassen-Schwungrad nach Anspruch 21, dadurch gekennzeichnet, daß die Schraubenfeder (31) bei Leerlaufdrehzahl der Brennkraftmaschine bereits vom Umfang der Nabenscheibe (55) abgehoben hat.

23. Zweimassen-Schwungrad nach einem der Ansprüche 1 bis 22, dadurch gekennzeichnet, daß die den Kanal (29) radial außen begrenzende Innenwandfläche (27) eine Kreiszylinderfläche ist, an die sich beiderseits im wesentlichen achsnormal verlaufende, im wesentlichen ebene Seitenwandflächenbereiche anschließen.

24. Zweimassen-Schwungrad nach Anspruch 23, dadurch gekennzeichnet, daß die Gleitschuhe (43) und/oder zur Kraftübertragung auf die Umfangsrichtung äußersten Stirnenden der Schraubenfedern (31') jedes Satzes (35, 37) vorgesehene Endschuhe (41) der Kontur des radial äußeren Bereichs des Kanals (29) angepaßt sind und axial an den Seitenwandflächen geführt sind.

25. Zweimassen-Schwungrad nach Anspruch 24, dadurch gekennzeichnet, daß die Endschuhe (41) und/oder die Gleitschuhe (43) radial zwischen die den Kanal (29) radial außen begrenzende Innenwandfläche (27) und die Schraubenfeder (31) greifende Verlängerungen (97, 115) haben, die axial an den Seitenwandbereichen geführt sind.

26. Zweimassen-Schwungrad nach Anspruch 25, dadurch gekennzeichnet, daß die Endschuhe (41) und/oder die Gleitschuhe (43) zusätzlich zu den Verlängerungen (97, 115) auf der radialen Höhe der Federachse (95) zusätzliche Seitenführungsflächen (111, 135) aufweisen.

27. Zweimassen-Schwungrad nach einem der Ansprüche 23 bis 26, dadurch gekennzeichnet, daß das erste Schwungrad (3) aus mehreren Teilen zusammengesetzt ist und eine fest mit einer Nabe (17) verbundene Primärscheibe (15) auf der Seite der Brennkraftmaschine, eine im Abstand von der Primärscheibe (15) auf deren von der Brennkraftmaschine fernen Seite angeordnete Deckscheibe (21) und einen die Primärscheibe (15) und die Deckscheibe (21) im Bereich von deren Außenumfang verbindenden Ring (23) umfaßt, der zusammen mit der Primarscheibe (15) und der Deckscheibe (21) den Kanal (29) begrenzt.

28. Zweimassen-Schwungrad nach Anspruch 27, dadurch gekennzeichnet, daß der Ring (23) die Innenwandfläche (27) bildet und an der Innenwandfläche (27) fein bearbeitet ist und daß am Außenumfang des Rings (23) einteilig ein Anlasserzahnkranz (25) angeformt ist.

29. Zweimassen-Schwungrad nach Anspruch 27 oder 28, dadurch gekennzeichnet, daß die in Umfangsrichtung äußersten Stirnenden der Schraubenfedern (31') jedes Satzes (35, 37) an Endschuhen (41) geführt sind, welchenzur Krafteinleitung Segmente (39) an der Primärscheibe (15) und der Deckscheibe (21) zugeordnet sind, und daß die Endschuhe (41) und die Segmente (39) zueinander komplementär geformte Prismenflächen (123, 125) aufweisen.

30. Zweimassen-Schwungrad nach Anspruch 29, dadurch gekennzeichnet, daß zur Kraftweiterleitung von den Endschuhen (41) auf das zweite Schwungrad (7) axial zwischen der Primärscheibe (15) und der Deckscheibe (21) eine relativ zum ersten Schwungrad (3) drehbare Nabenscheibe (55) angeordnet ist, von der Nasen (53) abstehen, die ebenfalls zu den Prismenflächen (123, 125) der Endschuhe (41) komplementäre Prismenflächen aufweisen.

31. Zweimassen-Schwungrad nach einem der Ansprüche 1 bis 30, dadurch gekennzeichnet, daß das erste Schwungrad (3) eine Primärscheibe (15) und eine ringförmige Deckscheibe (21) aufweist, die den Kanal (29) axial begrenzen, daß axial zwischen der Primärscheibe (15) und der Deckscheibe (21) eine relativ zu dem ersten Schwungrad (3) drehbare, ringförmige Nabenscheibe (55) angeordnet ist, die über den Satz (35, 37) Schraubenfedern (31) mit der Primärscheibe (15) und der Deckscheibe (21) drehelastisch gekuppelt ist und eine erste Federstufe (33) der Drehschwingungsdämpfereinrichtung (13) bildet, daß axial beiderseits der Nabenscheibe (55) und radial innerhalb des Bereichs der Schraubenfedern (37) der ersten Federstufe (33) zwei Seitenscheiben (57, 59) angeordnet sind, die radial nach außen gerichtete Ringkanten (77) bilden, auf welchen die Nabenscheibe (55) mit ihrer zentrischen Öffnung (63) drehbar radial geführt ist, daß die Seitenscheiben (57, 59) fest mit dem zweiten Schwungrad (7) verbunden sind und daß die Seitenscheiben (57, 59) mit der Nabenscheibe (55) über weitere Federn (61) drehelastisch gekuppelt sind, die eine in Reihe zur ersten Federstufe (33) angeordnete zweite Federstufe (51) der Drehschwingungsdämpfereinrichtung (13) bilden.

32. Zweimassen-Schwungrad nach Anspruch 31, dadurch gekennzeichnet, daß die beiden Seitenscheiben (57, 59) innerhalb der zentrischen Öffnung (63) der Nabenscheibe (55) axial aufeinander zu verformt sind, in der Öffnung (63) flach aneinander anliegen und in diesem Bereich durch Niete (65) fest am zweiten Schwungrad (7) befestigt sind.

33. Zweimassen-Schwungrad nach Anspruch 32, dadurch gekennzeichnet, daß die Nabenscheibe (55) von ihrer zentrischen Öffnung (63) radial nach innen abstehende Lappen (163) aufweist, die zur Drehwinkelbegrenzung der zweiten Federstufe (51) in Taschen (161) eingreifen, die von den Ringkanten (77) her radial in den aneinander anliegenden Bereich der Seitenscheiben (57, 59) hineinreichen.

34. Zweimassen-Schwungrad nach Anspruch 33, dadurch gekennzeichnet, daß die Tasche (161) in jeder Seitenscheibe (57, 59) in axialer Richtung schmäler als die Materialstärke der Seitenscheibe (57, 59) und axial geschlossen ist.

35. Zweimassen-Schwungrad nach einem der Ansprüche 32 bis 34, dadurch gekennzeichnet, daß das zweite Schwungrad (7) im Bereich der Niete (65) einen durch eine zentrische Öffnung der Deckscheibe (21) hindurch an den aneinanderliegenden Bereich der Seitenscheiben (57, 59) heranreichenden Bund (69) aufweist, der auf ein auf die Nabe (17) des ersten Schwungrads (3) aufgesetztes Lager (5) aufgesetzt ist, und daß das zweite Schwungrad (7) auf der dem ersten Schwungrad (3) axial abgewandten Seite durch einen an ihm einteilig angeformten Ringflansch (71) und auf der dem ersten Schwungrad (3) axial zugewandten Seite durch die angenieteten, aneinander anliegenden Bereiche der beiden Seitenscheiben (57, 59) an dem Lager (5) axial fixiert ist.

36. Zweimassen-Schwungrad nach einem der Ansprüche 31 bis 35, dadurch gekennzeichnet, daß zwischen dem radial inneren Bereich der Deckscheibe (21) und der dem zweiten Schwungrad (7) nächstgelegenen Seitenscheibe (59) radial zwischen den Federn (61) der zweiten Federstufe (51) und den Nieten (65) eine ringförmige, axial federnde Dichtung (71) angeordnet ist, die sich drehbar an der Seitenscheibe (59) und nicht drehbar an der Deckscheibe (21) abstützt.

37. Zweimassen-Schwungrad nach Anspruch 36, dadurch gekennzeichnet, daß die Dichtung (77) ein ringförmiges, an der Seitenscheibe (59) anliegendes Dichtelement (145) und ein mit seinem Innenrand an dem Dichtelement und an seinem Außenrand verdrehfest an der Deckscheibe (21) geführtes Tellerfederelement (141) umfaßt.

38. Zweimassen-Schwungrad nach Anspruch 32, dadurch gekennzeichnet, daß das Tellerfederelement (141) und die Deckscheibe (21) über einen ringförmig geschlossenen Auflagewulst (143; 159) an einem dieser Teile aneinander anliegen und daß Mittel (147, 149; 155, 157) zur Verdrehsicherung radial außerhalb des Auflagewulstes (143; 159) vorgesehen sind.

39. Zweimassen-Schwungrad nach Anspruch 38, dadurch gekennzeichnet, daß der Auflagewulst (143) an der Deckscheibe (21) angeformt ist und die Deckscheibe (21) radial außerhalb des Auflagewulstes (143) mehrere in Umfangsrichtung verteilt angeordnete Aussparungen (147) aufweist, in die radial von dem Tellerfederelement (141) abstehende Nasen (149) eingreifen.

40. Zweimassen-Schwungrad nach Anspruch 39, dadurch gekennzeichnet, daß die Aussparungen (147) in einem axial zur zweiten Federstufe (51) vorspringenden Bereich der Deckscheibe (21) vorgesehen sind.

41. Zweimassen-Schwungrad nach Anspruch 37, dadurch gekennzeichnet, daß die Deckscheibe (21) als Blechformteil ausgebildet ist und eine zur Primärscheibe (15) hin vorstehende, in Umfangsrichtung mit Unterbrechungen versehene Sicke (155) aufweist und daß das Tellerfederelement (141) auf einem kleineren Durchmesser als dem der Sicke (155) einen ringförmig geschlossenen Auflagewulst (159) aufweist, mit dem es direkt an der Deckscheibe (21) aufliegt sowie ferner nach außen abstehende Nasen (157) trägt, die in die Unterbrechungen der Sicke (155) eingreifen.

42. Zweimassen-Schwungrad nach Anspruch 37 bis 41, dadurch gekennzeichnet, daß das Dichtelement (139) von der Seitenscheibe (59) wegweisend in seinem radial äußeren Bereich einen umlaufenden Dichtwulst (145) aufweist, auf den der radial innere Bereich des Tellerfederelements (141) axial vorgespannt aufliegt und in seinem radial inneren Bereich einen über den Dichtwulst (145) axial vorstehenden Fortsatz (151) mit in Umfangsrichtung verteilten Lücken aufweist, in die nach radial innen abstehende Nasen (153) des Tellerfederelements (141) eingreifen.

## Claims

1. A two-mass flywheel to be disposed in the drive line of a motor vehicle driven by an internal combustion engine, comprising
- a first flywheel (3) adapted to be mounted on a crankshaft (1) of the internal combustion engine and in the same axis as its axis of rotation (9),
- a second flywheel (7) mounted to rotate about the same axis in relation to the first flywheel (3) and serving as a carrier for a friction coupling (11) in the drive line and
- coupling the two flywheels (3, 11) to each other in rotationally elastic manner, a torsional vibration damping means (13) with a plurality of coiled springs (31) disposed on a common mean diameter in a passage (19) in the first flywheel (3) and extending arcuately about the axis of rotation (9), whereby the torsional vibration damping means (13) has, for coupling the two flywheels (3, 7) in rotatingly elastic fashion, at least one set (35, 37) of at least two individual coil springs (31) which are disposed one after the other in the passage (29),
characterised in that these coil springs (31) are connected in series and in that between mutually facing ends of peripherally adjacent coil springs (31) of the set (35, 37) there is in each case, adapted for movement in relation to the two flywheels (3, 7), a sliding shoe (43) which guides the mutually facing ends of the adjacent coil springs (31) in the passage (29).

2. A two-mass flywheel according to Claim 1, characterised in that the ends of the coil springs (31') of each set (35, 37) which are outermost in the peripheral direction are, for the transfer of force, guided on end shoes (41) and in that the end shoes (41) and the sliding shoes (43) guide the coil springs (31) of the set (35, 37) at a radial distance from an inner wall surface (27) of the first flywheel (3) which radially outwardly defines the passage (29) and in that the passage (29) is at least partially filled with a viscous material (49), particularly a lubricant.

3. A two-mass flywheel according to Claim 2, characterised in that the end shoes (41) and/or the sliding shoes (43) have, arcuately curved around the axis of rotation (9) radially outer guide surfaces (91, 117) by which, at least during rotational operation, they bear in sliding fashion on the inner wall surface (27) which radially outwardly defines the passage (29).

4. A two-mass flywheel according to Claim 3, characterised in that the end shoes (41) and/or the sliding shoes (43) have projecting in the peripheral direction extension members (97, 115) which engage radially between the coil spring (31) and the inner wall surface (27) which defines the passage (29) and in that the radially outer guide surfaces (91, 117) at least approximately mask the extension members (97, 115) in the peripheral direction.

5. A two-mass flywheel according to Claim 4, characterised in that the end shoes (41) and/or sliding shoes (43) have substantially plane supporting surfaces (93, 127) for the end of the coil spring (31), the supporting surface (93, 127) extending approximately at right-angles to the spring axis (95) and having a substantially circular contour and in that on the side of each supporting surface (93, 127) which is remote from the extension member (97, 115) there is a projecting spring guide extension piece (103, 129) which is shorter in the peripheral direction than the extension member (97, 115).

6. A two-mass flywheel according to Claim 4 or 5, characterised in that at least in the region of the extension member (97, 115) there is in the arcuately curved radially outer guide surface (91, 117) of the end shoes (41) and/or sliding shoes (43) at least one lubricating groove (99, 119), and in particular a plurality of axially adjacently disposed lubricating grooves, the depth of which diminishes from that edge of the guide surface on the extension member (97, 117) which is situated above the coil spring (31) to the end of the coil spring (31).

7. A two-mass flywheel according to one of Claims 3 to 5, characterised in that the radius of curvature of the areas of the radially outer guide surfaces (91, 117) of the end shoes (41) and/or sliding shoes (43) which are intended to bear on the inner wall surface (27) which defines the passage (29) is equal to or is slightly less than the radius of the inner wall surface (27).

8. A two-mass flywheel according to one of Claims 3 to 7, characterised in that at least the portion of the guide surface (91, 117) of the end shoes (41) and/or sliding shoes (43) which is intended to bear on the inner wall surface (27) consists of a slip-promoting material.

9. A two-mass flywheel according to Claim 8, characterised in that the end shoes (41) and/or the sliding shoes (43) consist of metal and are, at least in the region of their radially outer guide surface (91, 117), hardened or carry a coating of slip-promoting material.

10. A two-mass flywheel according to Claim 8, characterised in that the end shoes (41) and/or the sliding shoes (43) are produced from a synthetic plastics material.

11. A two-mass flywheel according to Claim 10, characterised in that the end shoes (41) and/or the sliding shoes (43) are produced from fibre-reinforced synthetic plastics material and are, at least in the region of their radially outer guide surface (91, 117) provided with a slip-promoting coating or contain an admixture of slip-promoting material, particular Teflon^{(R)}.

12. A two-mass flywheel according to one of Claims 2 to 11, characterised in that the end shoes (41) and/or the sliding shoes (43) has in the peripheral direction of the first flywheel (3) projecting extension members (97, 115) which extend radially between the inner wall surface (27) which radially outwardly defines the passage (29) and a region of the coil spring (31) which is adjacent the end of the coil spring (31) which is guided by the shoes (41, 43).

13. A two-mass flywheel according to Claim 12, characterised in that the extension members (97, 115) of the end shoes (41) and/or sliding shoes (43) form abutments (101, 121) which determine the maximum compression of the coil springs (31).

14. A two-mass flywheel according to Claim 13, characterised in that in the peripheral direction of the first flywheel (3), between the extending members (97, 115) of the two shoes (41, 43) of at least one of the coil springs (31) there is a loosely displaceable bracing part (169) through which the extension members (97, 115) are braced on one another while limiting the compression of the coil spring (31).

15. A two-mass flywheel according to one of Claims 1 to 14, characterised in that at least one of the coil springs (31') of at least one set (35, 37) has a spring stiffness which differs from the spring stiffness of the remaining coil springs (31) in the set (35, 37).

16. A two-mass flywheel according to Claim 15, characterised in that the coil spring (31') with the greatest spring stiffness in the torque transmission path of the serially disposed coil springs (31) of the set (35, 37) is disposed in the first position in relation to the component of the torsional vibration damping means (31) which initiates the torque.

17. A two-mass flywheel according to one of Claims 1 to 16, characterised in that the ends of the coil springs (31') of each set (35, 37) which are outermost in the peripheral direction are, for force transfer, guided on end shoes (41), the spring supporting surface (127) of which, in the inoperative position of the torsional vibration damping means (13) extends at least approximately at right-angles to the axis (95) of the coil spring (31') and in that the torsional vibration damping means (13) guides the end shoes (41) on control elements (39, 53), the end shoes (41) and control elements (39, 53) having mutually associated and matchingly shaped prismatic guides of which every two - viewed in a plane at right-angles to the axis of rotation and containing the axis of the screw - has prism surfaces inclined towards each other, the prism surfaces (123, 125) of the end shoes (41) being so disposed in relation to the spring supporting surface (127) that a straight line (131) extending at one end through the point of intersection of the prism surfaces (123, 125) and at the other through the point of intersection of the spring axis (95) and the plane of the spring supporting surface (127) at an acute angle to the direction of the axis (95) of the spring when this latter is at rest extends at least approximately in the direction of the spring axis at maximum compression of the coil spring (31').

18. A two-mass flywheel according to Claim 17, characterised in that each end shoes (41) comprises an extension member (115) which engages radially between the coil spring (31') and the inner wall surface (27) of the first flywheel (3) which radially outwardly defines the passage (29) and which, when the torsional vibration damping means (13) is at rest, extends at a radial distance from the inner wall surface (27).

19. A two-mass flywheel according to Claim 18, characterised in that the radially outer (123) of the two prism surfaces (123, 125) of the end shoes (41) extends at an angle to the spring supporting surface (127), this angle of inclination, the friction coefficients of the materials of the end shoes (41) and the control elements (39, 53) and the initial tension in the coil spring (31') are so dimensioned that when a given working speed is exceeded due to centrifugal force, the extension member (115) moves radially outwardly and bears on the inner wall surface (27).

20. A two-mass flywheel according to one of Claims 1 to 19, characterised in that the torsional vibration damping means (13) comprises, for passing on the torque from the coil springs (31) of each set (35, 37) to the second flywheel (7) a hub disc (55) mounted to rotate in relation to the first flywheel (3) and having, cooperating with the ends of the coil springs (31') of each set (35, 37) which are outermost in the peripheral direction, noses (53) which project radially outwardly and in that the coil springs (31) are distributed around the periphery of the hub disc (55) and in that at least one coil spring (33) of each set (35, 37) bears with initial radial tension on the periphery of the hub disc (55) when the torsional vibration damping means (13) is in the rest position.

21. A two-mass flywheel according to Claim 20, characterised in that the radial initial tension is so attuned to the mass of the coil spring (33) which bears on the periphery of the hub disc (55) that in operation, the coil spring (33) is lifted off the periphery of the hub disc (55) by centrifugal forces.

22. A two-mass flywheel according to Claim 21, characterised in that at idling speed of the internal combustion engine, the coil spring (31) has already lifted off the periphery of the hub disc (55).

23. A two-mass flywheel according to one of Claims to 22, characterised in that the inner wall surface (27) which radially outwardly defines the passage (29) is a circularly cylindrical surface adjacent to both sides of which there are substantially axially perpendicularly extending and substantially flat areas of side wall surface.

24. A two-mass flywheel according to Claim 23, characterised in that the sliding shoes (43) and/or end shoes (41) provided for transfer of force to the, in the peripheral direction, outermost ends of the coil springs (31') of each set (35, 37), is/are adapted to match the contours of the radially outer portion of the passage (29) and is/are guided axially on the side wall surfaces.

25. A two-mass flywheel according to Claim 24, characterised in that the end shoes (41) and/or sliding shoes (43) have, engaging radially between the coil spring (31) and the inner wall surface (27) which radially outwardly defines the passage (29), extension members (97, 115) which are axially guided on the side wall areas.

26. A two-mass flywheel according to Claim 25, characterised in that the end shoes (41) and/or sliding shoes (43) have in addition to the extension members (97, 115) additional lateral guide surfaces (111, 135) at the radial height of the spring axis (95).

27. A two-mass flywheel according to one of Claims 23 to 26, characterised in that the first flywheel (3) is composed of a plurality of parts and comprises on the side of the internal combustion engine a primary disc (15) which is rigidly connected to a hub (17), a cover disc (21) disposed at a distance from the primary disc (15) on its side which is remote from the internal combustion engine and, connecting the primary disc (15) and the cover disc (21) in the region of their outer periphery, a ring (23) which together with the primary disc (15) and the cover disc (21) defines the passage (29).

28. A two-mass flywheel according to Claim 27, characterised in that the ring (23) forms the inner wall surface (27) and is finely machined on the inner wall surface (27) and in that a starter gear ring (25) is formed in one piece on the outer periphery of the ring (23).

29. A two-mass flywheel according to Claim 27 or Claim 28, characterised in that the ends of the coil springs (31') of each set (35, 37) which are outermost in the peripheral direction are guided on end shoes (41) with which, for the initiation of force, there are associated segments (29) on the primary disc (15) and cover disc (21) and in that the end shoes (41) and the segments (39) have prism surfaces (123, 125) which are shaped to match one another.

30. A two-mass flywheel according to Claim 29, characterised in that to transmit force from the end shoes (41) to the second flywheel (7) there is disposed axially between the primary disc (15) and the cover disc (21) and adapted for rotation in relation to the first flywheel (3), a hub disc (55) from which project noses (53) which likewise have prism surfaces to match the prism surfaces (123, 125) on the end shoes (41).

31. A two-mass flywheel according to one of Claims 1 to 30, characterised in that the first flywheel (3) comprises a primary disc (15) and an annular cover disc (21) which axially define the passage (29) and in that axially between the primary disc (15) and the cover disc (21) and adapted to rotate in relation to the first flywheel (3) there is an annular hub disc (55) which, via the set (35, 37) of coil springs (31), is rotationally elastically coupled to the primary disc (15) and cover disc (21) and forms a first spring stage (33) of the torsional vibration damping means (13) and in that axially on both sides of the hub disc (55) and radially within the area of the coil springs (37) of the first spring stage (33) there are two lateral discs (57, 59) which form radially outwardly directed ring edges (77) on which the central aperture (63) of the hub disc (55) is radially guided for rotation and in that the lateral discs (57, 59) are rigidly connected to the second flywheel (7) and in that the lateral discs (57, 59) are rotationally elastically coupled to the hub disc (55) by further springs (61) which form a second spring stage (51) of the torsional vibration damping means (13), disposed in series with the first spring stage (33).

32. A two-mass flywheel according to Claim 31, characterised in that the two lateral discs (57, 59), within the central aperture (63) in the hub disc (55), shaped axially towards each other, rest flat on each other in the aperture (63) and are rigidly fixed to the second flywheel (7) in this area by rivets (65).

33. A two-mass flywheel according to Claim 32, characterised in that the hub disc (55) has, projecting radially inwardly from its central aperture (63), lugs (163) which, in order to limit the angle of rotation of the second spring stage (51), engage pockets (161) which extend from the ring edges (77) radially into the adjacently disposed area of the lateral discs (57, 59).

34. A two-mass flywheel according to Claim 33, characterised in that the pocket (161) in each lateral disc (57, 59) is narrower in the axial direction than the thickness of the material used for the lateral disc (57, 59) and is axially closed.

35. A two-mass flywheel according to one of Claims 32 to 34, characterised in that the second flywheel (7) has in the region of the rivets (65) and extending through the central aperture in the cover disc (21) as far as the mutually contacting area of the lateral discs (57, 59) a shoulder (69) fitted on a bearing (5) mounted on the hub (17) of the first flywheel (3) and in that the second flywheel (7), on the side axially remote from the first flywheel (3) is axially fixed on the bearing (5) by an annular flange (71) integral with it and on the side axially facing the first flywheel (3) is fixed by the riveted-on mutually contacting areas of the two lateral discs (57, 59).

36. A two-mass flywheel according to one of Claims 31 to 35, characterised in that between the radially inner portion of the cover disc (21) and the lateral disc (59) closest to the second flywheel (7) there is radially between the springs (61) of the second spring stage (61) and the rivets (65) an annular axially resilient seal (71) which is rotatably against the lateral disc (59) while being non-rotatably braced against the cover disc (21).

37. A two-mass flywheel according to Claim 36, characterised in that the seal (77) comprises, bearing against the lateral disc (59), an annular sealing element (45) and a plate spring element (141) the inner edge of which is guided on the sealing element while its outer edge is rotationally rigidly guided on the cover disc (21).

38. A two-mass flywheel according to Claim 32, characterised in that the plate spring element (141) and the cover disc (21) bear on each other via an annularly closed supporting bead (143, 159) on one of these parts and in that means (147, 149, 155, 157) of providing a safeguard against rotation are provided radially outside the supporting bead (143, 159).

39. A two-mass flywheel according to Claim 38, characterised in that the supporting bead (143) is integrally formed on the cover disc (21) and in that the cover disc (21) has distributed in a peripheral direction and radially outside of the supporting bead (143) a plurality of recesses (147) engaged by noses (149) which project radially from the plate spring element (141).

40. A two-mass flywheel according to Claim 39, characterised in that the recesses (147) are provided in an area of the cover disc (21) which projects axially towards the second spring stage (51).

41. A two-mass flywheel according to Claim 37, characterised in that the cover disc (21) is constructed as a shaped sheet metal part and has, projecting towards the primary disc (15) and intermittent in a peripheral direction, a corrugation (155) and in that the plate spring element (141) has on a smaller diameter than that of the corrugation (155) an annularly closed supporting bead (159) by which it rests directly on the cover disc (21), and also has outwardly projecting noses (157) which engage the breaks in the corrugation (155).

42. A two-mass flywheel according to Claim 37 to 41, characterised in that the sealing element (139) has directed away from the lateral disc (59) and in its radially outer portion an encircling sealing bead (145) on which the radially inner portion of the spring plate element (141) rests with an axial initial tension while in its radially inner portion it has projecting axially beyond the sealing bead (145), an extension piece (151) with, distributed in the peripheral direction, gaps engaged by the radially inwardly projecting noses (153) on the plate spring element (141).

## Revendications

1. Volant d'inertie à deux masses destiné à être placé dans la chaîne cinématique d'un véhicule entraîné par un moteur à combustion interne, comprenant
- un premier volant d'inertie (3) pouvant être fixé à un vilebrequin (1) du moteur à combustion interne, coaxialement à son axe de rotation (9),
- un deuxième volant d'inertie (7) monté tournant coaxialement au premier volant d'inertie (3), portant un embrayage à friction (11), inséré dans la chaîne cinématique,
- un dispositif amortisseur d'oscillations de torsion (13) accouplant élastiquement en rotation les deux volants d'inertie (3, 11), comportant plusieurs ressorts hélicoïdaux (31), qui sont logés dans un canal (29) du premier volant d'inertie (3) décrivant un arc de cercle autour de l'axe de rotation (9), et selon un diamètre moyen commun,
le dispositif amortisseur d'oscillations de torsion (13) comportant au moins un groupe (35, 37) d'au moins deux ressorts hélicoïdaux (31) isolés accouplant élastiquement en rotation les deux volants d'inertie (3, 7), qui sont disposés l'un derrière l'autre dans le canal (29),
caractérisé en ce que ces ressorts hélicoïdaux (31) sont montés en série et un patin glissant (43), mobile par rapport aux deux volants d'inertie (3, 7), est disposé entre des extrémités frontales, orientées l'une vers l'autre, de ressorts hélicoïdaux (31) du groupe (35, 37) adjacentes dans le sens de la circonférence, qui guide dans le canal (29) les extrémités frontales, orientées l'une vers l'autre, des ressorts hélicoïdaux (31) adjacents.

2. Volant d'inertie à deux masses selon la revendication 1, caractérisé en ce que les extrémités frontales, les plus à l'extérieur dans le sens de la circonférence, des ressorts hélicoïdaux (31') de chaque groupe (35, 37) sont montées pour assurer la transmission de forces à des patins terminaux (41), en ce que les patins terminaux (41) et les patins glissants (43) guident les ressorts hélicoïdaux (31) du groupe (35, 37) selon un écart radial par rapport à une paroi intérieure (27), délimitant le canal (29) radialement vers l'extérieur, du premier volant d'inertie (3) et en ce que le canal (29) est rempli, au moins partiellement, d'un fluide visqueux (49), en particulier d'un lubrifiant.

3. Volant d'inertie à deux masses selon la revendication 2, caractérisé en ce que les patins terminaux (41) et/ou les patins glissants (43) possèdent des surfaces de guidage (91, 117) radialement extérieures, cintrées selon une forme d'arc de cercle autour de l'axe de rotation (9), par lesquelles ils reposent de façon glissante, au moins en fonctionnement de rotation, contre la paroi intérieure (27) délimitant le canal (29) radialement à l'extérieur.

4. Volant d'inertie à deux masses selon la revendication 3, caractérisé en ce que les patins terminaux (41) et/ou les patins glissants (43) présentent des prolongements (97, 115) dépassant en direction de la circonférence, qui s'appliquent radialement entre la paroi intérieure (27) délimitant le canal (29) et les ressorts hélicoïdaux (31) et en ce que les surfaces de guidage (91, 117) radialement extérieures recouvrent, au moins approximativement, les prolongements (97, 115) dans le sens de la circonférence.

5. Volant d'inertie à deux masses selon la revendication 4, caractérisé en ce que les patins terminaux (41) et/ou les patins glissants (43) possèdent des surfaces d'appui (93, 127) sensiblement planes pour l'extrémité frontale des ressorts hélicoïdaux (31), la surface d'appui (93, 127) s'étendant approximativement perpendiculairement à l'axe du ressort (95) et possédant un contour sensiblement circulaire, et en ce que, du côté, éloigné du prolongement (97, 115), de chaque surface d'appui (93, 127), dépasse un prolongement de guidage du ressort (103, 129) qui est plus court que le prolongement (97, 115) dans le sens de la circonférence.

6. Volant d'inertie à deux masses selon la revendication 4 ou 5, caractérisé en ce qu'est prévue, dans la zone du prolongement (97, 115), dans la surface de guidage (91, 117) radialement extérieure et cintrée en arc de cercle des patins terminaux (41) et/ou des patins glissants (43), au moins une rainure de graissage (99, 119), en particulier plusieurs rainures de graissage disposées de façon axialement adjacente, dont la profondeur va en diminuant, du bord de la surface de guidage du prolongement (97, 115) disposé au-dessus des ressorts hélicoïdaux (31), jusqu'à l'extrémité frontale des ressorts hélicoïdaux (31).

7. Volant d'inertie à deux masses selon l'une des revendications 3 à 5, caractérisé en ce que le rayon de courbure des zones, destinées à reposer contre la paroi intérieure (27) délimitant le canal (29), des surfaces de guidage (91, 117) radialement extérieures des patins terminaux (41) et/ou des patins glissants (43) est égal ou légèrement inférieur au rayon de la paroi intérieure (27).

8. Volant d'inertie à deux masses selon l'une des revendications 3 à 7, caractérisé en ce qu'au moins la zone, destinée à reposer contre la paroi intérieure (27), de la surface de guidage (91, 117) des patins terminaux (41) et/ou des patins glissants (43) est constituée en un matériau favorisant le glissement.

9. Volant d'inertie à deux masses selon la revendication 8, caractérisé en ce que les patins terminaux (41) et/ou les patins glissants (43) sont constitués en métal et sont trempés ou portent une couche de matériau favorisant le glissement, au moins dans la zone de leur surface de guidage (91, 117) radialement extérieure.

10. Volant d'inertie à deux masses selon la revendication 8, caractérisé en ce que les patins terminaux (41) et/ou les patins glissants (43) sont fabriqués en matière synthétique.

11. Volant d'inertie à deux masses selon la revendication 10, caractérisé en ce que les patins terminaux (41) et/ou les patins glissants (43) sont fabriqués en matière synthétique renforcée par des fibres et sont recouverts d'un revêtement favorisant le glissement, au moins dans la zone de leur surface de guidage (91, 117) radialement extérieure, ou contiennent un additif en matériau favorisant le glissement, en particulier en Teflon.

12. Volant d'inertie à deux masses selon l'une des revendications 2 à 11, caractérisé en ce que les patins terminaux (41) et/ou les patins glissants (43) présentent des prolongements (97, 115) dépassant dans la direction de la circonférence du premier volant d'inertie (3), qui s'étendent jusque radialement entre la paroi intérieure (27), délimitant le canal (29) radialement vers l'extérieur, et une zone du ressort hélicoïdal (31) faisant suite à l'extrémité frontale du ressort hélicoïdal (31) guidée par le patin (41, 43).

13. Volant d'inertie à deux masses selon la revendication 12, caractérisé en ce que les prolongements (97, 115) des patins terminaux (41) et/ou des patins glissants (43) forment des butées (101, 121), qui déterminent la compression maximale des ressorts hélicoïdaux (31).

14. Volant d'inertie à deux masses selon la revendication 13, caractérisé en ce que, dans le sens de la circonférence du premier volant d'inertie (3), entre les prolongements (97, 115) des deux patins (41, 43) d'au moins l'un des ressorts hélicoïdaux (31), un élément d'appui (169) est monté de façon librement coulissante, par l'intermédiaire duquel les prolongements (97, 115) s'appuient l'un sur l'autre lors de la limitation de la compression des ressorts hélicoïdaux (31).

15. Volant d'inertie à deux masses selon l'une des revendications 1 à 14, caractérisé en ce qu'au moins l'un des ressorts hélicoïdaux (31') d'au moins un groupe (35, 37) présente une rigidité différente de celle des autres ressorts hélicoïdaux (31) du groupe (35, 37).

16. Volant d'inertie à deux masses selon la revendication 15, caractérisé en ce que les ressorts hélicoïdaux (31') présentant la rigidité la plus élevée sont montés, dans le parcours de transmission du couple de rotation des ressorts hélicoïdaux (31), disposés les uns derrière les autres, du groupe (35, 37), en première position par rapport aux composants du dispositif amortisseur d'oscillations de torsion (13) amorçant le couple de rotation.

17. Volant d'inertie à deux masses selon l'une des revendications 1 à 16, caractérisé en ce que les extrémités frontales, les plus à l'extérieur dans le sens de la circonférence, des ressorts hélicoïdaux (31') de chaque groupe (35, 37) sont destinées à la transmission de forces aux patins terminaux (41), dont la surface d'appui pour le ressort (127), lorsque le dispositif amortisseur d'oscillations de torsion (13) est au repos, s'étend, au moins approximativement, de façon perpendiculaire à l'axe (95) des ressorts hélicoïdaux (31') et
en ce que le dispositif amortisseur d'oscillations de torsion (13) guide les patins terminaux (41) sur des éléments de commande (39, 53), les patins terminaux (41) et les éléments de commande (39, 53) présentant des guidages prismatiques, de formes complémentaires, associés les uns aux autres, dont chacun comprend deux faces en prisme, inclinées l'une en direction de l'autre - vu dans un plan comprenant l'axe du ressort hélicoïdal perpendiculairement à l'axe de rotation -, et les faces en prisme (123, 125) du patin terminal (41) étant disposées par rapport à la surface d'appui du ressort (127) de telle sorte qu'une droite (131), passant d'une part par le point d'intersection des surfaces en prisme (123, 125) et d'autre part par le point d'intersection de l'axe du ressort (95) et du plan de la surface d'appui pour le ressort (127), en formant un angle aigu par rapport à la direction de l'axe du ressort (95) au repos, s'étend, au moins approximativement, dans la direction de l'axe du ressort lorsque le ressort hélicoïdal (31') est comprimé au maximum.

18. Volant d'inertie à deux masses selon la revendication 17, caractérisé en ce que chaque patin terminal (41) présente un prolongement (115) s'étendant radialement entre une paroi intérieure (27) du premier volant d'inertie (3), délimitant le canal (29) radialement à l'extérieur, et les ressorts hélicoïdaux (31'), qui présente un écart radial vis-à-vis de la paroi intérieure (27) lorsque le dispositif amortisseur d'oscillations de torsion (13) est au repos.

19. Volant d'inertie à deux masses selon la revendication 18, caractérisé en ce que celle des deux faces en prisme (123, 125) du patin terminal (41) qui est radialement extérieure (123) est inclinée de façon oblique par rapport à la surface d'appui pour le ressort (127), l'angle d'inclinaison, les coefficients de frottement des matériaux constituant le patin terminal (41) et les éléments de commande (39, 53) et la précontrainte du ressort hélicoïdal (31') étant calculés de telle sorte que, lorsqu'est dépassée une certaine vitesse de rotation en fonctionnement, du fait de la force centrifuge, le prolongement (115) se déplace radialement vers l'extérieur et vient s'appliquer contre la paroi intérieure (27).

20. Volant d'inertie à deux masses selon l'une des revendications 1 à 19, caractérisé en ce que le dispositif amortisseur d'oscillations de torsion (13), pour la transmission du couple de rotation des ressorts hélicoïdaux (31) de chaque groupe (35, 37) au deuxième volant d'inertie (7), présente un disque de moyeu (55) monté tournant par rapport au premier volant d'inertie (3), dont des becs (53) coopérant avec les extrémités frontales, les plus à l'extérieur dans le sens de la circonférence, des ressorts hélicoïdaux (31') de chaque groupe (35, 37), dépassent radialement vers l'extérieur, et en ce que les ressorts hélicoïdaux (31) sont répartis sur le pourtour du disque de moyeu (55), et en ce qu'au moins un ressort hélicoïdal (33) de chaque groupe (35, 37), est monté avec une précontrainte radiale sur le pourtour du disque de moyeu (55), lorsque le dispositif amortisseur d'oscillations de torsion (13) est au repos.

21. Volant d'inertie à deux masses selon la revendication 20, caractérisé en ce que la précontrainte radiale est déterminée en fonction de la masse des ressorts hélicoïdaux (33) reposant sur le pourtour du disque de moyeu (55) de telle sorte que les ressorts hélicoïdaux (33) se soulèvent du pourtour du disque de moyeu (55), en fonctionnement, du fait des forces centrifuges.

22. Volant d'inertie à deux masses selon la revendication 21, caractérisé en ce que les ressorts hélicoïdaux (31) se sont déjà soulevés du pourtour du disque de moyeu (55) lorsque le moteur à combustion interne tourne au ralenti.

23. Volant d'inertie à deux masses selon l'une des revendications 1 à 22, caractérisé en ce que la paroi intérieure (27) délimitant le canal (29) radialement à l'extérieur présente une surface cylindrique à base circulaire, à laquelle font suite, de part et d'autre, des parties formant parois latérales sensiblement planes, sensiblement perpendiculaires à l'axe.

24. Volant d'inertie à deux masses selon la revendication 23, caractérisé en ce que les patins glissants (43) et/ou les patins terminaux (41) prévus, pour transmettre les forces, sur les extrémités frontales, les plus à l'extérieur dans le sens de la circonférence, des ressorts hélicoïdaux (31') de chaque groupe (35, 37), sont adaptés au contour de la zone radialement extérieure du canal (29) et sont guidés axialement sur les parois latérales.

25. Volant d'inertie à deux masses selon la revendication 24, caractérisé en ce que les patins terminaux (41) et/ou les patins glissants (43) possèdent des prolongements (97, 115), s'appliquant radialement entre la paroi intérieure (27) délimitant le canal (29) radialement à l'extérieur et les ressorts hélicoïdaux (31), qui sont guidés axialement sur les parties de parois latérales.

26. Volant d'inertie à deux masses selon la revendication 25, caractérisé en ce que les patins terminaux (41) et/ou les patins glissants (43) présentent, en plus des prolongements (97, 115), à la hauteur radiale de l'axe du ressort (95), des faces de guidage latérales supplémentaires (111, 135).

27. Volant d'inertie à deux masses selon l'une des revendications 23 à 26, caractérisé en ce que le premier volant d'inertie (3) est constitué de plusieurs parties et comprend un disque primaire (15) relié fixement à un moyeu (17) sur le côté du moteur à combustion interne, un disque de recouvrement (21) monté à distance du disque primaire (15), sur son côté éloigné du moteur à combustion interne, et un anneau (23), reliant le disque primaire (15) et le disque de recouvrement (21) dans la zone de leur pourtour extérieur, qui délimite le canal (29) avec le disque primaire (15) et le disque de recouvrement (21).

28. Volant d'inertie à deux masses selon la revendication 27, caractérisé en ce que l'anneau (23) constitue la paroi intérieure (27) et comporte une finition sur la paroi intérieure (27), et en ce qu'une couronne dentée pour le démarreur (25) est formée de façon monobloc sur le pourtour extérieur de l'anneau (23).

29. Volant d'inertie à deux masses selon la revendication 27 ou 28, caractérisé en ce que les extrémités frontales, les plus à l'extérieur dans le sens de la circonférence, des ressorts hélicoïdaux (31') de chaque groupe (35, 37) sont guidées sur des patins terminaux (41) auxquels sont associés, pour la transmission des forces, des segments (39) présents sur le disque primaire (15) et sur le disque de recouvrement (21), et en ce que les patins terminaux (41) et les segments (39) présentent des faces en prisme (123, 125) de formes complémentaires.

30. Volant d'inertie à deux masses selon la revendication 29, caractérisé en ce que, pour la retransmission des forces des patins terminaux (41) au deuxième volant d'inertie (7), un disque de moyeu (55), rotatif par rapport au premier volant d'inertie (3), est monté axialement entre le disque primaire (15) et le disque de recouvrement (21), dont dépassent des becs (53) qui présentent également des faces en prisme complémentaires aux faces en prisme (123, 125) des patins terminaux (41).

31. Volant d'inertie à deux masses selon l'une des revendications 1 à 30, caractérisé en ce que le premier volant d'inertie (3) possède un disque primaire (15) et un disque de recouvrement (21) annulaire, qui délimitent axialement le canal (29), en ce qu'est monté, axialement entre le disque primaire (15) et le disque de recouvrement (21), un disque de moyeu (55) annulaire, rotatif par rapport au premier volant d'inertie (3), qui, par l'intermédiaire du groupe (35, 37) de ressorts hélicoïdaux (31), est accouplé élastiquement en rotation avec le disque primaire (15) et le disque de recouvrement (21) et constitue un premier étage à ressorts (33) du dispositif amortisseur d'oscillations de torsion (13), en ce que sont disposés, axialement de part et d'autre du disque de moyeu (55) et radialement à l'intérieur de la zone des ressorts hélicoïdaux (37) du premier étage à ressorts (33), deux disques latéraux (57, 59), qui forment des arêtes annulaires (77) orientées radialement vers l'extérieur, sur lesquelles le disque de moyeu (55) est monté radialement rotatif par son ouverture centrale (63), en ce que les disques latéraux (57, 59) sont reliés fixement avec le deuxième volant d'inertie (7), et en ce que les disques latéraux (57, 59) sont accouplés élastiquement en rotation avec le disque de moyeu (55) par l'intermédiaire d'autres ressorts (61), qui forment un deuxième étage à ressorts (51) du dispositif amortisseur d'oscillations de torsion, monté en série par rapport au premier étage à ressorts (33).

32. Volant d'inertie à deux masses selon la revendication 31, caractérisé en ce que les deux disques latéraux (57, 59), à l'intérieur de l'ouverture centrale (63) du disque de moyeu (55) sont déformés axialement l'un vers l'autre, s'appliquant à plat l'un contre l'autre dans l'ouverture (63) et, dans cette zone, sont montés fixement sur le deuxième volant d'inertie (7) au moyen de rivets (65).

33. Volant d'inertie à deux masses selon la revendication 32, caractérisé en ce que le disque de moyeu (55) présente des pattes (163) dépassant radialement vers l'intérieur à partir de son ouverture centrale (63), qui, pour limiter la position angulaire du deuxième étage à ressorts (51), s'engagent dans des poches (161), qui pénètrent radialement, à partir des arêtes annulaires (77), dans les zones adjacentes des disques latéraux (57, 59).

34. Volant d'inertie à deux masses selon la revendication 33, caractérisé en ce que la poche (161), dans chaque disque latéral (57, 59), est plus étroite dans le sens axial que l'épaisseur de paroi des disques latéraux (57, 59) et est fermée axialement.

35. Volant d'inertie à deux masses selon l'une des revendications 32 à 34, caractérisé en ce que le deuxième volant d'inertie (7) présente, dans la zone du rivet (65), un collet (69), traversant une ouverture centrale du disque de recouvrement (21) et aboutissant à la zone adjacente des disques latéraux (57, 59), qui est disposé sur un palier (5) posé sur le moyeu (17) du premier volant d'inertie (3), et en ce que le deuxième volant d'inertie (7) est fixé axialement sur le palier (5), sur le côté axialement opposé au premier volant d'inertie (3), par une bride annulaire (71) ne formant qu'une seule pièce avec lui et, sur le côté orienté axialement en direction du premier volant d'inertie (3), par les zones rivetées et adjacentes des deux disques latéraux (57, 59).

36. Volant d'inertie à deux masses selon l'une des revendications 31 à 35, caractérisé en ce qu'entre la zone radialement intérieure du disque de recouvrement (21) et le disque latéral (59) le plus proche du deuxième volant d'inertie (7) est disposé, radialement entre les ressorts (61) du deuxième étage à ressorts (51) et les rivets (65), un joint annulaire (71), axialement élastique, qui s'appuie de façon rotative sur le disque latéral (59) et de façon non rotative sur le disque de recouvrement (21).

37. Volant d'inertie à deux masses selon la revendication 36, caractérisé en ce que le joint (71) comprend un élément d'étanchéité (145) annulaire, reposant contre le disque latéral (59), et une rondelle-ressort (141) montée, par son bord intérieur, sur l'élément d'étanchéité et, par son bord extérieur, montée sans pouvoir tourner sur le disque de recouvrement (21).

38. Volant d'inertie selon la revendication 32, caractérisé en ce que la rondelle-ressort (141) et le disque de recouvrement (21) reposent l'un contre l'autre, par l'intermédiaire d'un bourrelet d'étanchéité (143 ; 159) annulaire fermé, formé sur l'une de ces pièces, et en ce que des moyens (147, 149 ; 155, 157) sont prévus pour le blocage en rotation, radialement à l'extérieur du bourrelet d'étanchéité (143 ; 159).

39. Volant d'inertie à deux masses selon la revendication 38, caractérisé en ce que le bourrelet d'étanchéité (143) est formé sur le disque de recouvrement (21), et le disque de recouvrement (21) présente, radialement à l'extérieur du bourrelet d'étanchéité (143), plusieurs évidements (147) répartis dans le sens de la circonférence, dans lesquels s'engagent des becs (149) dépassant radialement de la rondelle-ressort (141).

40. Volant d'inertie à deux masses selon la revendication 39, caractérisé en ce que les évidements (147) sont prévus dans une zone du disque de recouvrement (21) dépassant axialement en direction du deuxième étage à ressorts (51).

41. Volant d'inertie à deux masses selon la revendication 37, caractérisé en ce que le disque de recouvrement (21) est conformé en pièce préformée en tôle et présente une nervure (155) dépassant en direction du disque primaire (15), pourvue d'interruptions dans le sens de la circonférence, et en ce que la rondelle-ressort (141) présente, sur un diamètre inférieur à celui de la nervure (155), un bourrelet d'étanchéité (159) annulaire fermé, par lequel il repose directement contre le disque de recouvrement (21), et, en outre, des becs (157) dépassant vers l'extérieur, qui s'engagent dans les interruptions de la nervure (155).

42. Volant d'inertie à deux masses selon l'une des revendications 37 à 41, caractérisé en ce que l'élément d'étanchéité (139), dans sa zone radialement extérieure, présente un bourrelet d'étanchéité (145) périphérique, orienté à l'opposé du disque latéral (59), sur lequel repose, avec une précontrainte axiale, la zone radialement intérieure de la rondelle-ressort (141), et présente, dans sa zone radialement intérieure, un prolongement (151) dépassant axialement au-delà du bourrelet d'étanchéité (145), avec des encoches réparties dans le sens de la circonférence, dans lesquelles pénètrent des becs (153), dépassant radialement vers l'intérieur, de la rondelle-ressort (141).
